(19) **Europäisches Patentamt / European Patent Office / Office européen des brevets**

(11) **EP 1 995 960 A1**

(12) **EUROPEAN PATENT APPLICATION**
published in accordance with Art. 158(3) EPC

(43) Date of publication:
**26.11.2008 Bulletin 2008/48**

(21) Application number: **07737365.2**

(22) Date of filing: **26.02.2007**

(51) Int Cl.:
*H04N 5/93* (2006.01)  *H04N 7/173* (2006.01)
*H04N 7/26* (2006.01)

(86) International application number:
**PCT/JP2007/053512**

(87) International publication number:
**WO 2007/099906 (07.09.2007 Gazette 2007/36)**

(84) Designated Contracting States:
**DE FR GB**

(30) Priority: **27.02.2006 JP 2006049672**

(71) Applicant: **Panasonic Corporation**
**Kadoma-shi**
**Osaka 571-8501 (JP)**

(72) Inventors:
• **MOROHASHI, Takaharu**
**c/o Matsushita Electric Industrial Co.,Ltd.**
**Chuo-Ku**
**Osaka 540-6207 (JP)**

• **TAKESUE, Yasuhiro**
**c/o Matsushita Electric Industrial Co.,Ltd.**
**Chuo-Ku**
**Osaka 540-6207 (JP)**

(74) Representative: **Eisenführ, Speiser & Partner**
**Patentanwälte Rechtsanwälte**
**Postfach 10 60 78**
**28060 Bremen (DE)**

(54) **REPRODUCER, PORTABLE TELEPHONE, AND REPRODUCING METHOD**

(57) An audio PTS judgment unit 110 performs gap judgment whether a gap has occurred between a PTS currently acquired by an audio PTS acquisition unit 108 (a current PTS) and a PTS stored in an audio PTS storage unit 109 (a previous PTS). If the audio PTS judgment unit 110 judges affirmatively, a synchronization control unit 111 instructs an audio decoding unit 103 to decode, as fail-safe data, an audio frame having the current PTS in which the gap has occurred.

FIG. 1

EP 1 995 960 A1

**Description**

TECHNICAL FIELD

The present invention relates to a playback device that decodes encoded data and plays back the decoded data. The present invention particularly relates to a synchronous playback device that decodes bit streams of digital-encoded video signals and audio signals and performs synchronous playback of the decoded video signals and audio signals.

BACKGROUND ART

In Japan, digital broadcasting is performed in accordance with the ARIB (Association of Radio Industries and Businesses) standard. The ARIB standard is established based on the DVB (Digital Video Broadcasting) standard used in Europe, and covers the MPEG (Moving Picture Experts Group) 2-TS (Transport Stream) system for video and audio broadcasting.

An MPEG2-TS stream is composed of a plurality of TS packets each having a fixed length of 188 bytes. The length of the TS packet is determined to be 188 bytes in consideration of consistency with the length of ATM (Asynchronous Transfer Mode) cells.
Each of the TS packets is composed of a packet header having a fixed length of 4 bytes, an adaptation field having a variable length, and a payload. A PID (packet identifier) and various flags are defined in the packet header. The PID identifies a type of the TS packet.

A PES (Packetized Elementary Stream) packet that contains streams such as video streams and audio streams is divided into a plurality of TS packets having the same PID number, and the divided TS packets are transmitted. Video encoding is performed in accordance with the MPEG2 standard or the MPEG4-AVC/H.264 standard used for one-segment broadcasting, for example. Audio encoding is performed in accordance with the 23C (MPEG2 Advanced Audio Coding) standard, for example.

Also, in the same way as a PES packet that contains video streams and audio streams, a PES packet that contains data such as subtitles is divided into a plurality of TS packets, and the divided TS packets are transmitted.
An MPEG2-TS stream contains a PCR (Program Clock Reference) that is transmitted at predetermined time intervals so as to adjust an STC (System Time Clock) that is a reference signal of a decoder.

An adaptation field included in a TS packet is used for transmitting additional information relating to streams. A PCR of 6 bytes is stored in an optional field included in the adaptation field.
An STC counter included in the decoder counts the STC. The STC is corrected based on the PCR.

In order to perform audio-video synchronization of an MPEG2-TS stream, a time stamp is added to each access unit (for example, each video picture and each audio frame). The access unit is converted into a PES packet. A PTS (Presentation Time Stamp) for designating a playback time is added to a header of the PES packet.

The PTS is described in the same method as that of the STC. The STC increases in synchronization with a PCR inside the decoder. The decoder compares the STC with the PTS. When the STC matches the PTS, the decoder starts display processing and decoding processing. As a result, playback in synchronization with the STC is performed. In this way, the STC that increases in synchronization with the PCR and a PTS added to each of transmitted audio and video PES packets included in an MPEG2-TS stream are compared with each other. When the STC matches a PTS of each of the audio and video PES packets, display processing and decoding processing are started. This realizes audio-video synchronous playback.

According to broadcast recording/playback system, an encoded and multiplexed stream provided by a video provider is stored in the decoder. Encoded audio data and encoded video data included in the stored stream are separated from each other. The separated encoded audio data and video data are independently decoded, and decoded audio signals and video signals are played back in synchronization with each other.
As a method for audio-video synchronization of stored streams, an audio master mode in which audio playback signals are focused on is used (See Patent Document 1 for example). According to the audio master mode, when each of audio frames is output, an STC is updated based on an output time of the audio frame. At this time, a display time of each of video frames is compared with the STC. Based on a result of the comparison, operations for accelerating or delaying a display time of the video frame are performed.

Also, a video master mode in which video playback signals are focused on is used for audio-video synchronization of stored streams (See Patent Document 2 for example).
Here, in order to start audio-video playback of stored streams, a control method for setting a playback start time (hereinafter an "entry point") to start playback from a desired point (time) is used.

The following describes the above method for starting playback from a desired entry point to perform synchronous playback.

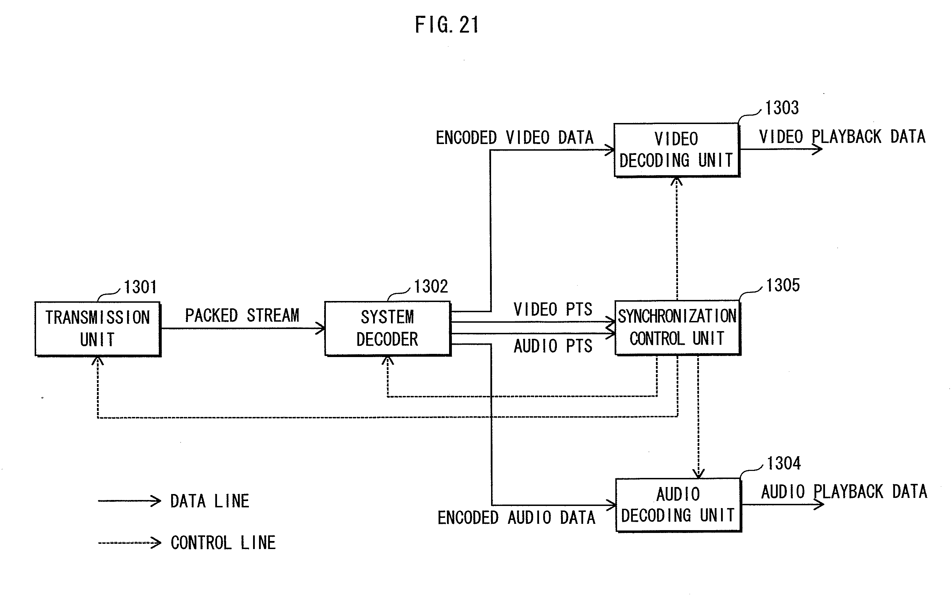

FIG. 21 shows the structure of a synchronous playback device according to a conventional art. The synchronous playback device includes, as shown in FIG. 21, a transmission unit 1301 for transmitting a stream, a system decoder 1302 for extracting necessary information from the transmitted stream, a video decoding unit 1303 for decoding video frames, an audio decoding unit 1304 for decoding audio frames, and a synchronization control unit 1305 for controlling an operation timing of each of the components included in the synchronous playback device. The following describes operations performed by the synchronous playback device with the above structure for starting playback from an entry point.

As shown in FIG. 21, the transmission unit 1301 transmits a stream including an entry point to the system decoder 1302. The system decoder 1302 transmits encoded video data and encoded audio data included in the received stream to the video decoding unit 1303 and the audio decoding unit 1304, respectively. Also, the system decoder 1302 transmits audio PTSs and video PTSs to the synchronization control unit 1305. The video decoding unit 1303 decodes video frames of the received encoded video data. The audio decoding unit 1304 decodes audio frames of the received encoded audio data. The synchronization control unit 1305 performs a synchronous output control of video frames and audio frames by controlling the transmission unit 1301, the system decoder 1302, the video decoding unit 1303, and the audio decoding unit 1304.

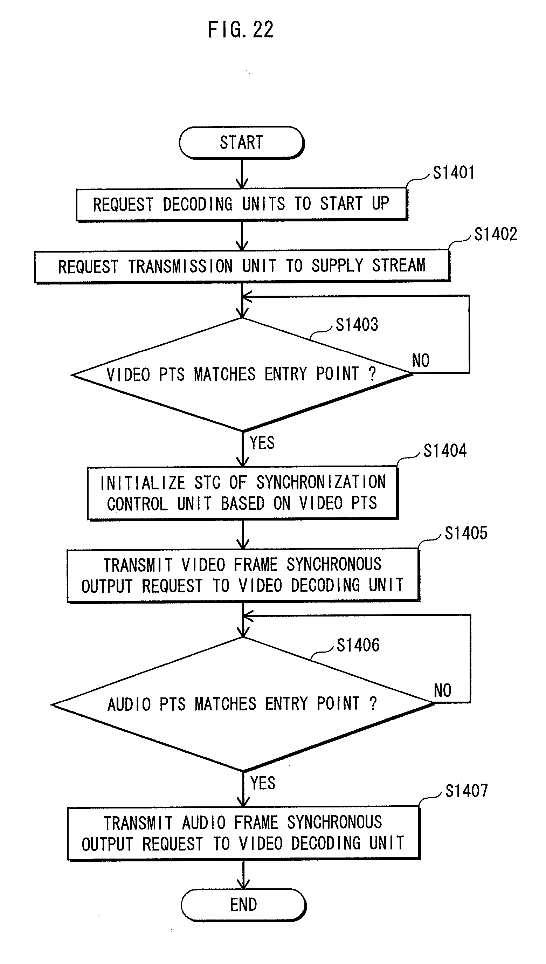

FIG. 22 is a flow chart showing operation procedures for starting playback from an entry point performed by the synchronization control unit 1305 included in the above synchronous playback device. Operations of the synchronization control unit 1305 are described below in detail with reference to the flow chart shown in FIG. 22.

When an entry point is externally designated and start of playback of a stream from the entry point is instructed, the synchronization control unit 1305 issues a start-up request to the transmission unit 1301, the system decoder 1302, the video decoding unit 1303, and the audio decoding unit 1304 (Step S1401). Upon receiving the start-up request, the transmission unit 1301, the system decoder 1302, the video decoding unit 1303, and the audio decoding unit 1304 start up.

Next, the synchronization control unit 1305 issues a stream supply request to the transmission unit 1301 (Step S1402). Upon receiving the stream supply request, the transmission unit 1301 transmits the stream including the entry point to the system decoder 1302 in order from the front of the stream. Upon receiving the stream from the transmission unit 1301, the system decoder 1302 starts separating encoded video data and encoded audio data included in the stream from each other, and extracting the separated encoded video and audio data.

Then, the video decoding unit 1303 continues to decode video frames of the encoded video data received from the system decoder 1302 until a video PTS received from the system decoder 1302 matches the entry point within a predetermined threshold range (hereinafter "an entry point acceptable range") (Step S1403). At this time, the video decoding unit 1303 only decodes video frames, and does not display the decoded video frames yet.

If a video PTS received from the system decoder 1302 matches the entry point within the entry point acceptable range (Step S1403: YES), the synchronization control unit 1305 initializes the STC included therein based on the video PTS (Step S1404).

Then, the synchronization control unit 1305 issues a video frame synchronous display request to the video decoding unit 1303 (Step S1405). Upon receiving the video frame synchronous display request, the video decoding unit 1303 decodes a video frame whose video PTS received from the system decoder 1302 matches the entry point within the entry point acceptable range in Step S1403, and also displays the decoded video frame at the same time. The decoded video frame is displayed for the first time at this stage. After this, under the synchronization control by the synchronization control unit 1305 using the STC and video PTSs received from the system decoder 1302, the video decoding unit 1303 successively decodes video frames of the encoded video data received from the system decoder 1302, and displays the decoded video frames.

Then, the audio decoding unit 1304 continues to decode audio frames of the encoded audio data received from the system decoder 1302 until an audio PTS received from the system decoder 1302 matches the STC within the entry point acceptable range (Step S1406).

If an audio PTS received from the system decoder 1302 matches the STC within the entry point acceptable range (Step S1406: YES), the synchronization control unit 1305 issues an audio frame synchronous display request to the audio decoding unit 1304 (Step S1407).

Upon receiving the audio frame synchronous display request, the audio decoding unit 1304 decodes an audio frame whose audio PTS received from the system decoder 1302 matches the STC within the entry point acceptable range in Step S1406, and also displays the decoded audio frame at the same time. The decoded audio frame is displayed for the first time at this stage. After this, under the synchronization control by the synchronization control unit 1305 using the STC and audio PTSs received from the system decoder 1302, the audio decoding unit 1304 successively decodes audio frames of the encoded audio data received from the system decoder 1302, and displays the decoded audio frames.

Also, the Patent Document 2 discloses an art for detecting a video frame and an audio frame that match a designated entry point with an accuracy in units of video frames and audio frames by using the temporal reference that is display order information defined by the MPEG standard.

Furthermore, the Patent Document 3 discloses a synchronous playback device including a timer for error judgment.

According to this synchronous playback device, when output preparation of only one of a video frame and an audio frame is completed after a lapse of a predetermined time period, it is possible to output the only one frame whose output preparation is complete. Also, even if a received stream includes only one of a video frame and audio frame that matches an entry point, it is possible to normally start playback.

Patent Document 1: Japanese Patent Application Publication No. H7-50818

Patent Document 2: Japanese Patent Application Publication No. H9-514146

Patent Document 3: Japanese Patent Application Publication No. 2001-346166

DISCLOSURE OF THE INVENTION

PROBLEMS THE INVENTION IS GOING TO SOLVE

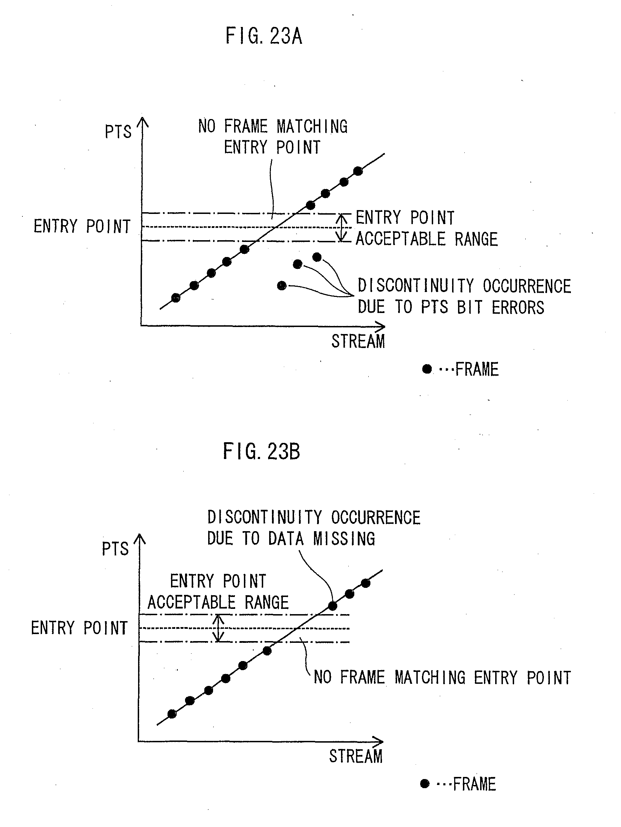

A first problem to be solved by the present invention is described with reference to FIGs. 23A and 23B. FIGs. 23A and 23B show examples of a stream recorded under a bad radio wave condition. In FIGs. 23A and 23B, a vertical axis represents a PTS, and a horizontal axis represents a stream. FIG. 23A shows a case where a PTS bit error has occurred due to a transmission error, for example. FIG. 23B shows a case where a frame loss from a stream has occurred due to the bad radio wave condition at the time of recording the stream. According to conventional arts, if a time when a PTS error has occurred is designated as an entry point as shown in FIG. 23A, it is impossible to detect a PTS matching the entry point acceptable range. Likewise, according to conventional arts, if a time when a frame loss has occurred is designated as an entry point as shown in FIG. 23B, it is impossible to detect a PTS matching the entry point acceptable range. As a result, a playback start point is not determined, and therefore it is impossible to start playback.

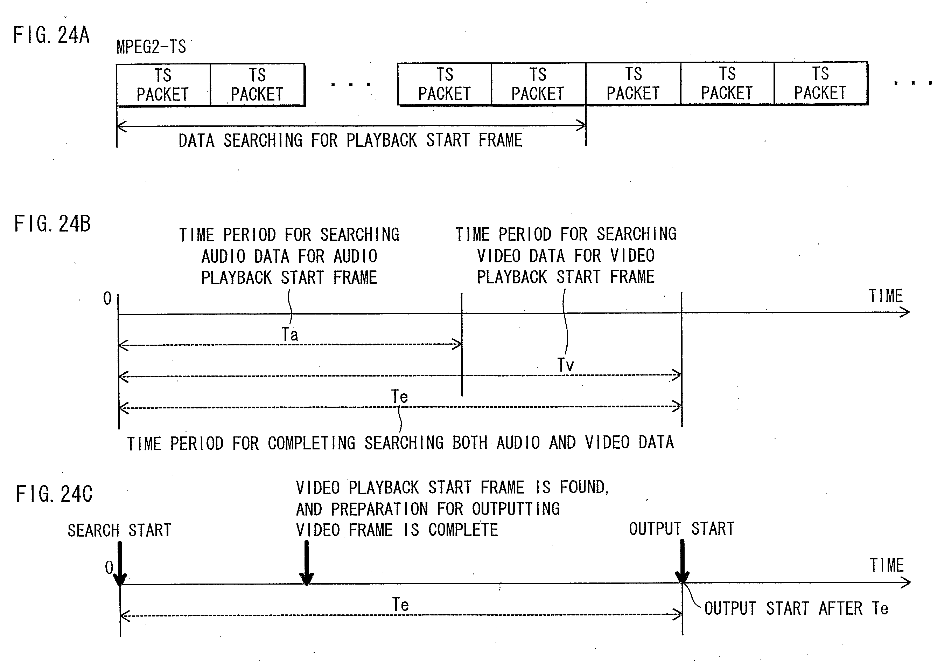

Next, a second problem to be solved by the present invention is described with reference to FIGs. 24A to 24C. FIG. 24A shows MPEG2-TS packets. In FIG. 24A, target data is searched for a start frame. In other words, the target data is searched for a frame matching an entry point acceptable range. For example, if time periods for searching the target data for an audio start frame and a video start frame are respectively Ta and Tv (Ta < Tv), Te is defined as a time period during which searching for both of the audio and video start frames completes, as shown in FIG. 24B. In such a case, even if the video start frame is found from the target data and preparation for outputting the video start frame completes, it is impossible to output the video start frame unless "Te" has elapsed, as shown in FIG. 24C.

In other words, if only one of an audio start frame and a video start frame is found, only the found start frame is output at a fixed time without being influenced by the time periods for searching for the audio start frame and the video start frame. Accordingly, in order to output only one of an audio start frame and a video start frame, start of playback is delayed for a longer time period for searching for one of the audio start frame and the video start frame than a time period for searching for the other.

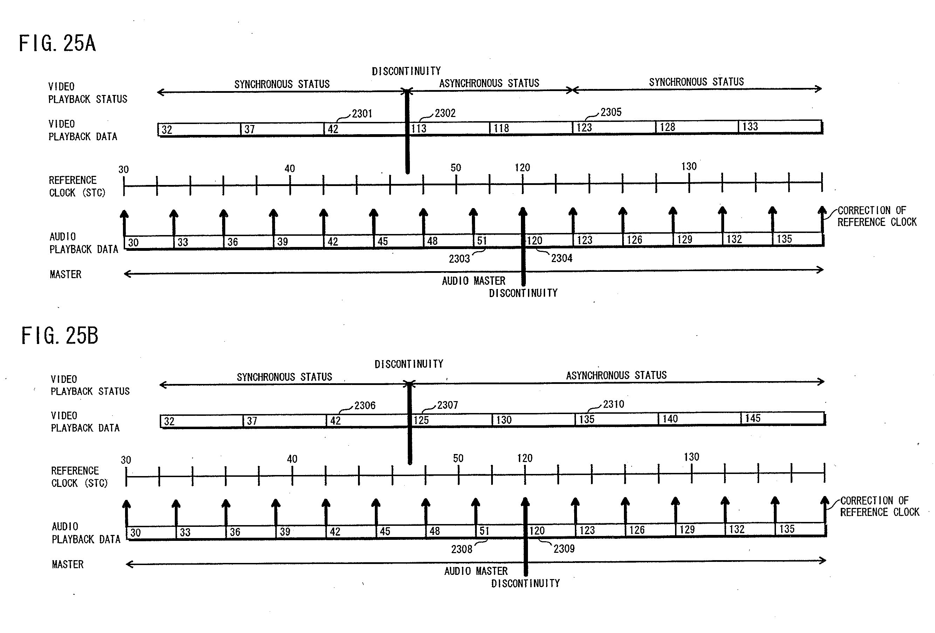

Furthermore, a third problem to be solved by the present invention is described with reference to FIGs. 25A and 25B. FIG. 25A shows an example case where a video playback device that operates in the audio master mode outputs both of video playback data and audio playback data normally, and a temporal discontinuity has occurred in a multiplexed bit stream recorded under a bad radio wave condition.

As shown in FIGs. 25A and 25B, video playback data and audio playback data are represented per frame. A number applied to each frame represents a PTS. For example, a PTS of a video frame 2301 is 42. Since the video playback device operates in the audio master mode in the example shown in FIG. 25A, the reference clock is corrected based on a PTS of each audio frame. A display period for video frames is 5, and a display period for audio frames is 3. Temporal discontinuities have occurred between the video frame 2301 and a video frame 2302, and between an audio frame 2303 and an audio frame 2304.

Since the video playback device operates in the audio master mode, the audio playback data is continuously played back even at a discontinuity point at which the discontinuity has occurred. The reference clock increases discontinuously like the audio playback data. Compared with this, there is a great difference between a PTS of the video frame 2302 and the reference clock, and this difference is beyond an allowable range for synchronous playback. As a result, an asynchronous playback is performed. Suppose that the allowable range is 10, for example. The PTS of the video frame 2302 is 113, and the reference clock is 47. A difference between the PTS of the video frame 2302 and the reference clock is 66, and is beyond the allowable range 10. However, after playback of the audio playback data at a discontinuity point between the audio frames 2303 and 2304, a PTS of the video frame 2305 is synchronous with the reference clock. As a result, synchronous playback is normally performed again, and there arises no problem.

However, as shown in FIG. 25B, suppose that temporal discontinuities have occurred between a video frame 2306 and a video frame 2307, and between an audio frame 2308 and an audio frame 2309. A time period between the video frame 2306 and the video frame 2307 (83 in FIG. 25B) differs from a time period between the audio frame 2308 and the audio frame 2309 (69 in FIG. 25B). If asynchronization control is performed in the same way as that shown in FIG. 25A, a difference between a PTS of each video frame and the reference clock is beyond the allowable range even after playback of video playback data at a discontinuity point. As a result, an asynchronous playback continues. That is, even after playback of audio playback data at a discontinuity point between the audio frame 2308 and the audio frame 2309, a difference between a PTS of each video frame following the video frame 2310 and the reference clock is always 12. The difference continues to be beyond the allowable range 10 for synchronous playback, and therefore asynchronous playback continues without returning to synchronous playback.

If the asynchronous playback continues, the audio playback data and the video playback data are not synchronous with each other. As a result, lip-sync mismatch continues.

In order to address such a case, according to conventional arts, if asynchronous playback continues for a certain time period, playback of video playback data or audio playback data is suspended, a status of the video playback device is restored into a playback start status. Then, playback is started again. However, if playback is suspended and then the playback is started again, a status of the video playback device is initialized. Accordingly, start-up processing needs to be performed. Furthermore, since data that has been already stored in a buffer or the like is discarded due to the initialization, it takes a long time period for starting the playback again. As a result, a problem occurs that neither video nor audio is output for the long time period.

The present invention is made in view of the above problems. The present invention aims to provide a playback device. According to the playback device, in any case such as a case where a temporal discontinuity between video display times and/or between audio display times has occurred, when playback starts or during playback, it is possible to start playback from the most appropriate video frame and audio frame depending on case, and continue the playback without interruption of video signals and audio signals.

## MEANS TO SOLVE THE PROBLEMS

In order to solve the above problems, a playback device according to a first aspect of the present invention is a playback device for playing back a data stream that contains frames respectively having frame playback times that are provided with predetermined time intervals, the playback device comprising: an acquisition unit operable to sequentially acquire the frame playback times of the frames; a storage unit operable to store therein the frame playback times acquired by the acquisition unit; a judgment unit operable to judge whether a current frame playback time that has been most recently acquired by the acquisition unit is included in a playback start period including a designated playback start time, and if judging negatively, further judge whether a difference between the current frame playback time and a previous frame playback time that is immediately previous to the current frame playback time is greater than the predetermined time interval; and a playback unit operable, (a) if the judgment unit judges that the current frame playback time is included in the playback start period, to start playback from a frame having the current frame playback time, and (b) if the judgment unit judges that the current frame playback time is not included in the playback start period and further judges that the difference is greater than the predetermined time interval, to start playback from a frame having the current frame playback time.

In order to solve the above problems, a playback device according to a second aspect of the present invention is a playback device for decoding and playing back a data stream that contains video frames and audio frames respectively having video playback times and audio playback times that are provided with predetermined time intervals, the playback device comprising: an acquisition unit operable to sequentially acquire video frame playback times of the video frames and audio frame playback times of the audio frames; a judgment unit operable to judge whether a video frame playback time and an audio frame playback time acquired by the acquisition unit are respectively included in a playback start period including a designated playback start time; and a decoding unit operable, if the judgment unit judges affirmatively, to decode a video frame and an audio frame respectively having the video frame and the audio frame included in the playback start period, and start playback from the decoded video frame and the decoded audio frame, wherein maximum time limits Tv and Ta are set, Tv being required for judging whether a video frame playback time acquired by the acquisition unit is included in the playback start period, and Ta being required for judging whether the audio frame playback time acquires by the acquisition unit is included in the playback start period, and (i) when Tv is greater than Ta, if the acquired audio frame playback time is not included in the playback start period and the video frames have been decoded after a lapse of Ta, the decoding unit plays back the video frames, and (ii) when Ta is greater than Tv, if the acquired video frame playback time is not included in the playback start period and the audio frames have been decoded after a lapse of Tv, the decoding unit plays back the audio frames.

In order to solve the above problems, a playback device according to a third aspect of the present invention is a playback device for playing back a data stream that contains frames respectively having frame playback times provided with predetermined time intervals, in synchronization with a system time clock included therein, the playback device comprising: a judgment unit operable to sequentially judge whether frame playback times of the frames match the system time clock; a playback unit operable, if the judgment unit judges affirmatively, to play back a frame having a frame playback time that matches the system time clock; a control unit operable, if the judgment unit judges negatively, to instruct the playback unit to play back, in asynchronization with the system time clock, a frame having a frame playback time that does not match the system time clock; and a count unit operable, in accordance with an instruction issued by the control unit, to count the number of frames that have been played back by the playback unit in asynchronization with the system time clock, wherein if the judgment unit judges negatively and the count unit counts a predetermined number of frames that have been played back in asynchronization with the system time clock, the control unit instructs the playback unit to forcibly play back, in synchronization with the system time clock, a frame having a frame playback time that does not match the system time clock.

In order to solve the above problems, a portable telephone of the present invention is a portable telephone comprising the playback device according to any one of the first to the third aspects.

EFFECT OF THE INVENTION

According to the playback device according to the first aspect, the following is possible. At start of playback of a stream from which a frame has been lost or in which an error has occurred due to recording under a bad radio wave condition, even if a frame matching an entry point acceptable range (a frame included in a playback start time period) is lost from the stream, it is possible to start playback from the most appropriate frame located near the lost frame.

According to the playback device according to the second aspect, maximum time limits for searching for an audio frame and a video frame matching an entry point acceptable range are separately managed. Accordingly, if only one of the audio frame and the video frame matching the entry point acceptable range is found, it is possible to output the one found frame to start playback without being influenced by a longer time period for searching for either one of an audio or a video playback start frame than a time period for searching for the other.

According to the playback device according to the third aspect, it is possible to reduce an asynchronous status between a PTS of each frame and the reference clock during playback of a stream from which a frame has been lost or in which an error has occurred due to recording under a bad radio wave condition.

Also, in the synchronous playback device according to the first aspect, the data stream may contain program reference times that increase by each predetermined period, and the playback device may further comprise a detection unit operable to (a) sequentially acquire program reference times, (b) judge whether a difference between a current program reference time that has been most recently acquired and a previous program reference time that is immediately previous to the current program reference time is greater than a predetermined threshold value, and (c) if judging affirmatively, detect that a discontinuity has occurred between the current program reference time and the previous program reference time, and store therein the current program reference time, if the difference between the current frame playback time and the previous frame playback time is greater than the predetermined time interval and the detection unit stores therein the current program reference time, the judgment unit may further judge whether a difference between the current program reference time and the current frame playback time is greater than the predetermined period, and if the difference between the current program reference time and the current frame playback time is no more than the predetermined period, the playback unit may not start playback from the frame having the current frame playback time.

With this structure, if a frame matching an entry point acceptable range (a frame included in a playback start time period) is lost from a stream, whether the frame is lost due to a frame bit error or a packet error in the stream is judged. Only if the frame is lost due to the frame bit error, it is possible to start playback from the most appropriate frame located near the lost frame.

Also, the synchronous playback device according to the first aspect may comply with an MPEG (Moving Picture Experts Group) standard, wherein each of the frame playback times may be a PTS (Presentation Time Stamp) defined by the MPEG standard, and each of the program reference times may be a PCR (Program Clock Reference) defined by the MPEG standard.

With this structure, when a playback device defined by the MPEG standard starts playback of a stream from which a frame has been lost or in which an error has occurred, even if a frame matching an entry point acceptable range (a frame included in a playback start time period) is lost from the stream, it is possible to start playback of the stream from the most appropriate frame located near the lost frame.

Also, in the synchronous playback device according to the third aspect, (i) if the judgment unit judges that a frame playback time is greater than the system time clock and the count unit counts the predetermined number of frames that have been played back in asynchronization with the system time clock, the control unit may instruct the playback unit to wait until the frame playback time matches the system time clock and play back a frame having the frame playback time, and (ii) if the judgment unit judges that a frame playback time is less than the system time clock and the count unit counts the predetermined number of frames that have been played back in asynchronization with the system time clock, the control unit may instruct the playback unit not to play back a frame having the frame playback time.

With this structure, if a PTS of each frame is asynchronous with the reference clock during playback of a stream from which a frame has been lost or in which an error has occurred, it is possible to restore an asynchronous status of the playback device into a synchronous status by forcibly accelerating or delaying the frame.

Also, in the synchronous playback device according to the third aspect, if the judgment unit judges that a frame playback time is greater than the system time clock and the count unit counts the predetermined number of frames that have been played back in asynchronization with the system time clock, and further if a difference between the frame playback time and the system time clock is greater than a predetermined difference t1, the control unit may instruct the playback unit to wait for a predetermined period t2 that is less than the predetermined difference t1, and play back a frame having the frame playback time.

With this structure, if asynchronization occurs between a PTS of a frame and the reference clock to a great extent, it is possible to restore an asynchronous status of the playback device into a synchronous status by forcibly accelerating the frame little by little while removing a user's uncomfortable feeling at viewing video as much as possible. Also, in the synchronous playback device according to the third aspect, the frames may include first media frames relating to first media and second media frames relating to second media, the system time clock may be set based on each of first media frame playback times of the first media frames, the judgment unit may separately judge whether each of the first media frame playback times matches the system time clock, and whether each of second media frame playback times of the second media frames matches the system time clock, the count unit may separately count the number of first media frames that have been played back in asynchronization with the system time clock and the number of second media frames that have been played back in asynchronization with the system time clock, and if the judgment unit judges that a first media frame playback does not match the system time clock and the count unit counts the predetermined number of first media frames that have been played back in asynchronization with the system time clock, the control unit may determine to set the system time clock based on each of the second media frame playback times.

With this structure, during playback of a stream in a master mode corresponding to first media frames (audio frames, for example), if a frame has been lost from the first media frames or an error has occurred in the first media frames, and further if second media frames (video frames, for example) are normal, it is possible to switch from the master mode corresponding to the first media frames to a master mode corresponding to the normal second media frames in which no discontinuity has occurred.

BRIEF DESCRIPTION OF THE DRAWING

FIG. 1 is a block diagram showing the structure of a synchronous playback device according to a first embodiment of the present invention;
FIG. 2 shows the data structure of an MPEG2-TS stream according to the first embodiment of the present invention;
FIG. 3 shows a correspondence between the MPEG2-TS stream and a PES packet according to the first embodiment of the present invention;
FIG. 4 shows the data structure of the PES packet according to the first embodiment of the present invention;
FIG. 5 is a flow chart showing video frame search processing according to the first embodiment of the present invention;
FIG. 6 is a flow chart showing audio frame search processing according to the first embodiment of the present invention;
FIG. 7 is a flow chart showing playback processing according to the first embodiment of the present invention;
FIG. 8 is a block diagram showing the structure of a synchronous playback device according to a second embodiment of the present invention;
FIG. 9 is a flow chart showing time-out processing according to the second embodiment of the present invention;
FIG. 10 is a block diagram showing the structure of a synchronous playback device according to a third embodiment of the present invention;
FIG. 11 shows the data structure of a PES packet according to the third embodiment of the present invention;
FIG. 12 is a flow chart showing video frame search processing according to the third embodiment of the present invention;
FIG. 13 is a flow chart showing audio frame search processing according to the third embodiment of the present invention;
FIG. 14 is a flow chart showing synchronization control processing according to a fourth embodiment of the present invention;
FIG. 15 is a timing chart showing the synchronization control processing according to the fourth embodiment of the present invention;
FIG. 16 is a flow chart showing synchronization control processing according to a fifth embodiment of the present invention;
FIG. 17 is a timing chart showing the synchronization control processing according to the fifth embodiment of the present invention;
FIG. 18 is a flow chart showing synchronization control processing according to a sixth embodiment of the present invention;

FIG. 19 is a timing chart showing the synchronization control processing according to the sixth embodiment of the present invention;

FIG. 20 is a block diagram showing the structure of a portable telephone according to the present invention;

FIG. 21 is a block diagram showing the structure of a synchronous playback device according to a conventional art;

FIG. 22 is a flow chart showing processing performed by the synchronous playback device according to the conventional art;

FIG. 23 is a conceptual diagram showing playback processing according to a conventional art;

FIG. 24 is a conceptual diagram showing frame search processing according to a conventional art; and

FIG. 25 is a conceptual diagram showing processing performed during playback according to a conventional art.

DESCRIPTION OF CHARACTERS

100, 800, and 1000: synchronous playback device
101, 801, and 1301: transmission unit
102 and 802: demultiplexing unit
103, 803, and 1304: audio decoding unit
104, 804, and 1303: video decoding unit
105, 108, 805, and 808: PTS acquisition unit
106 and 109: PTS storage unit
107 and 110: PTS judgment unit
111, 811, and 1305: synchronization control unit
112, 812, and 1313: reference clock unit
813: audio time management unit
814: video time management unit
1302: system decoder
2000: portable telephone

BEST MODE FOR CARRYING OUT THE INVENTION

The following describes embodiments of the present invention with reference to the drawings.

(1. First Embodiment)

(1-1. Structure)

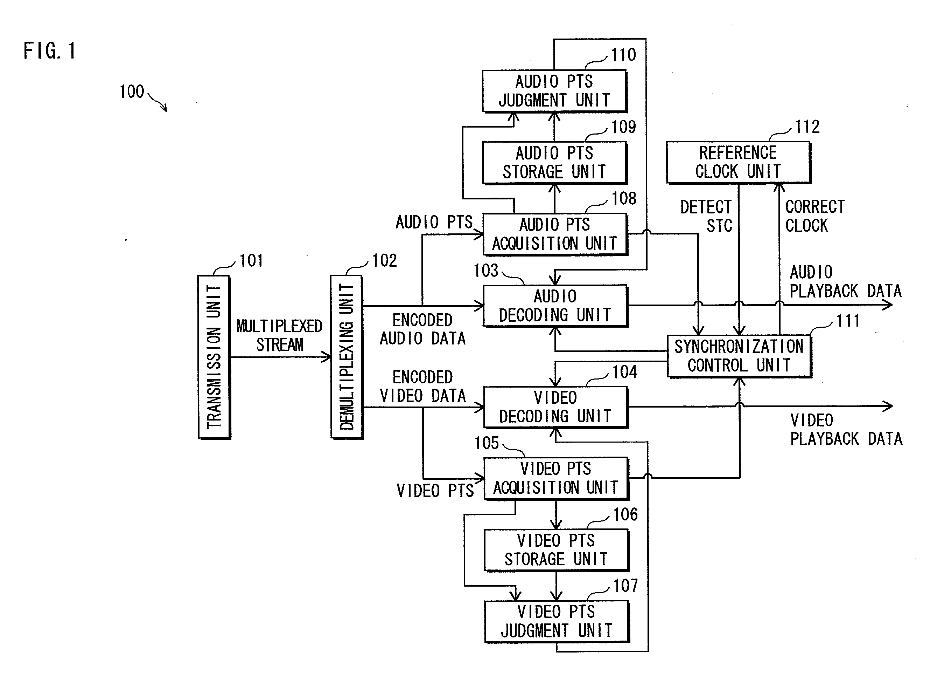

FIG. 1 shows the structure of a synchronous playback device 100 according to a first embodiment.

As shown in FIG. 1, the synchronous playback device 100 includes a transmission unit 101, a demultiplexing unit 102, an audio decoding unit 103, a video decoding unit 104, an audio PTS acquisition unit 108, an audio PTS storage unit 109, an audio PTS judgment unit 110, a video PTS acquisition unit 105, a video PTS storage unit 106, a video PTS judgment unit 107, a synchronization control unit 111, and a reference clock unit 112.

The transmission unit 101 transmits a multiplexed stream (an MPEG2-TS stream, which is described later) to the demultiplexing unit 102.

The demultiplexing unit 102 extracts a video PTS that is video playback time information and encoded video data from a PES header of a video PES packet (a PES packet which is described later) of the multiplexed stream, and transmits the extracted video PTS and encoded video data to the video decoding unit 104 and the video PTS acquisition unit 105. Also, the demultiplexing unit 102 extracts an audio PTS that is audio playback time information and encoded audio data from a PES header of an audio PES packet of the multiplexed stream, and transmits the extracted audio PTS and encoded audio data to the audio decoding unit 103 and the audio PTS acquisition unit 108.

The audio decoding unit 103 decrypts encoded audio data.

The video decoding unit 104 decrypts encoded video data.

The audio PTS acquisition unit 108 acquires an audio PTS extracted by the demultiplexing unit 102.

The audio PTS storage unit 109 stores therein an audio PTS acquired by the audio PTS acquisition unit 108.

The audio PTS judgment unit 110 compares an audio PTS currently acquired by the audio PTS acquisition unit 108 with an audio PTS stored in the audio PTS storage unit 109.

The video PTS acquisition unit 105 acquires a video PTS extracted by the demultiplexing unit 102.

The video PTS storage unit 106 stores therein a video PTS acquired by the video PTS acquisition unit 105.

The video PTS judgment unit 107 compares a video PTS currently acquired by the video PTS acquisition unit 105 with a video PTS stored in the video PTS storage 106.

The synchronization control unit 111 controls an operation timing of each of the components included in the synchronous playback device 100.

The reference clock unit 112 manages a system time clock (hereinafter an "STC") that is a reference clock of the system.

(1-2. Data)

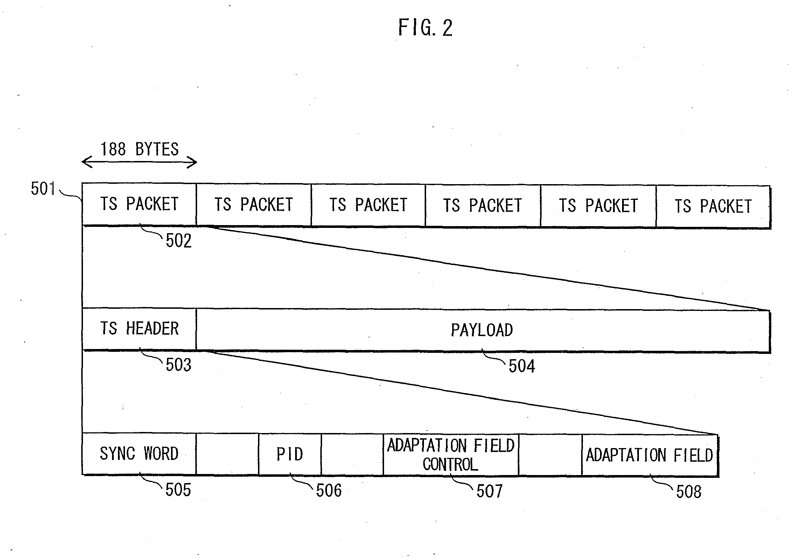

Here, the data structure of an MPEG2-TS stream is described with reference to FIG. 2. In FIG. 2, an MPEG2-TS stream 501 is composed of a plurality of TS packets each having a fixed length of 188 bytes. An MPEG2-TS packet 502 is composed of a TS header 503 and a payload 504.

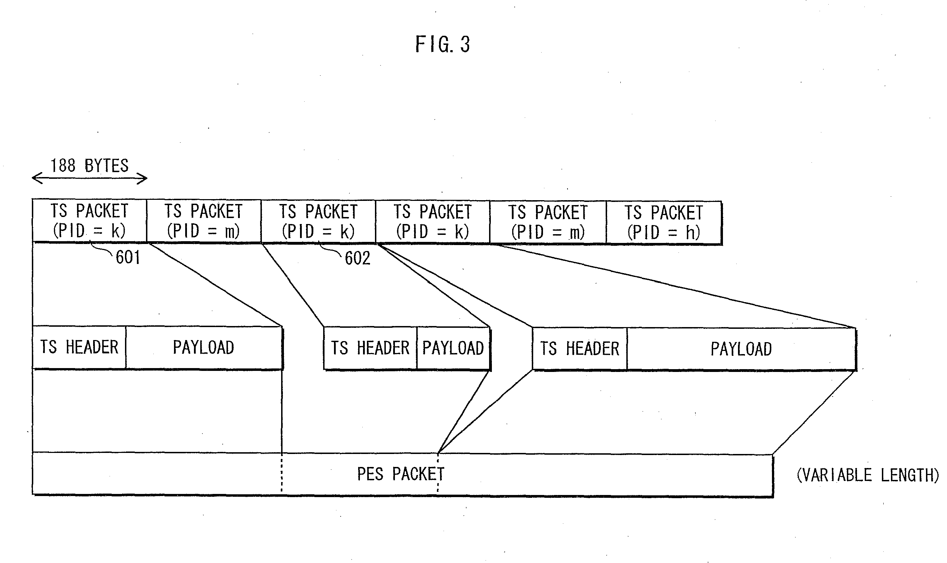

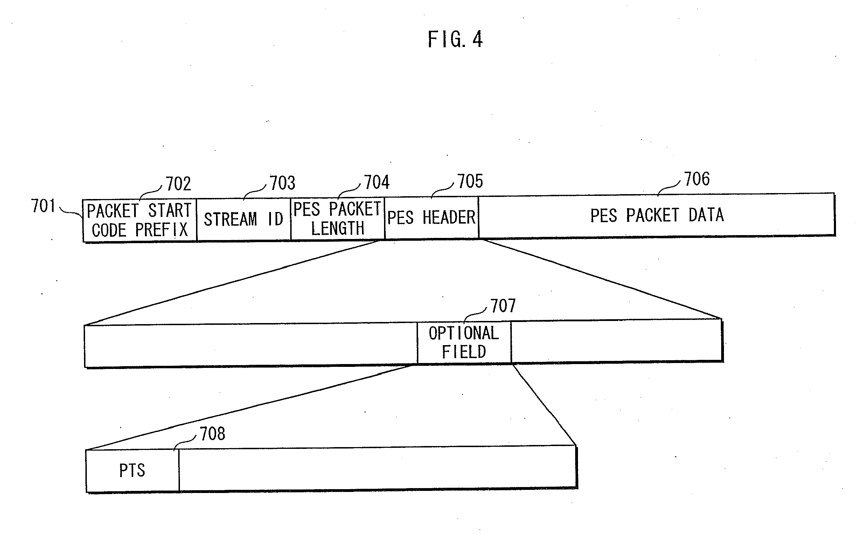

The TS header 503 is composed of a sync word 505 showing the beginning of the MPEG2-TS packet 502, a data identifier (PID) 506 identifying data included in the MPEG2-TS packet 502, an adaptation field control 507 indicating whether the payload 504 is valid, an adaptation field 508, and other control flags (not shown in the figure). As shown in FIG. 3, a PES packet is divided into a plurality of fixed-length TS packets having the same PIDs 601, 602, and the like, and the divided TS packets are transmitted. Here, the data structure of the PES packet is described with reference to FIG. 4. As shown in FIG. 4, a PES packet 701 is composed of a packet start code prefix 702 showing the beginning of the PES packet 701, a stream ID 703 identifying a stream stored in a PES packet data 706, a PES packet length 704 showing a length of the PES packet 701, a PES header 705, and the PES packet data 706 in which the stream is stored.

Furthermore, the PES header 705 is composed of an optional field 707 and other control flags (not shown in the figure). A PTS 708 that is playback time information of the stream included in the PES packet 701 is stored in the optional field 707. Also, encoded data is stored in the PES packet data 706.

In the present specification, video data is decoded in accordance with the MPEG4-AVC/H.26 or the MPEG2/4. Audio is decoded in accordance with the 23C.

(1-3. Operations)

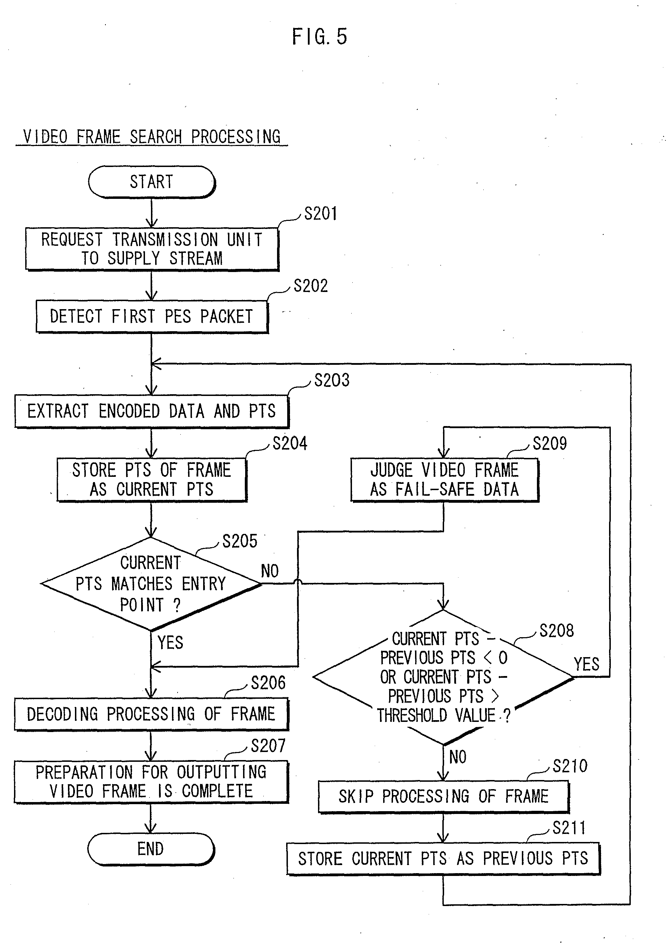

FIGs. 5 to 7 are flow charts showing an operation procedure for starting playback from an entry point performed by the synchronous playback device 100 according to the first embodiment. Operations for starting playback are described in detail with reference to the flow charts shown in FIGs. 5 to 7.

Firstly, FIG. 5 shows the following operations. A video frame corresponding to an entry point from which playback is instructed to be started is searched for. If the video frame corresponding to the entry point is lost, the most appropriate video frame located near the lost video frame is determined. Here, this most appropriate video frame is referred to as "fail-safe data".

When an entry point of video data is externally designated, the synchronization control unit 111 clears a video frame output preparation completion flag to "0", and starts processing.

Firstly, in Step S201, the synchronization control unit 111 requests the transmission unit 101 to supply a stream. Upon being requested, the transmission unit 101 transmits an MPEG2-TS stream (hereinafter a "multiplexed stream") including the entry point to the demultiplexing unit 102. The demultiplexing unit 102 stores the multiplexed stream in a buffer included therein. The transmission unit 101 manages overflows of the buffer included in the demultiplexing unit 102. When overflows are likely to occur, the transmission unit 101 stops transmitting a multiplexed stream. Then, when the buffer becomes available, the transmission unit 101 restarts transmitting the multiplexed stream. The buffer is consumed in skip processing of audio frames, decoding processing of audio frames, or decoding processing of video frames.

In Step S202, the demultiplexing unit 102 detects a first PES packet. Here, the first PES packet is a PES packet of a transmitted stream that firstly includes a PTS.

In Step S203, the demultiplexing unit 102 extracts encoded video data and a video PTS, and transmits the extracted encoded video data to the video decoding unit 104, and transmits the extracted video PTS to the video PTS acquisition unit 105.

In Step S204, the video PTS acquisition unit 105 transmits, to the synchronization control unit 111 and the video PTS storage unit 106, the video PTS transmitted from the demultiplexing unit 102.

In Step S205, the synchronization control unit 111 compares the entry point that has been externally designated with a video PTS currently acquired by the video PTS acquisition unit 105 (hereinafter a "current video PTS"), and performs video entry point judgment for judging whether the entry point corresponds to a video frame having the current video PTS. If the entry point corresponds to the video frame having the current video PTS, the flow proceeds to Step S206.

If the entry point does not correspond to the video frame having the current video PTS, the flow proceeds to Step S208.

Here, this video entry point judgment is performed based on whether the following condition expression (Expression 1) is satisfied. In the (Expression 1), EPv1 represents the entry point that has been externally designated, Tv1 represents a time period per frame, and PTSnv1 represents the video PTS extracted in Step S203. One time period per video frame is used as Tv1. For example, one time period per frame is 66 ms for 15 fps, and is 33 ms for 30 fps. Note that this condition expression is just an example, and a method for performing the video entry point judgment is not limited to this condition expression.

$$\mathrm{(Expression\ 1)}$$

$$\mathrm{EPv1} - 1/2 \times \mathrm{Tv1} < \mathrm{PTSnv1} \leqq \mathrm{EPv1} + 1/2 \times 1/2 \times \mathrm{Tv1}$$

If the entry point corresponds to the current video PTS (Step S205: YES), the synchronization control unit 111 transmits a decoding permission signal to the video decoding unit 104 (Step S206). In accordance with the decoding permission signal transmitted from the synchronization control unit 111, the video decoding unit 104 performs decoding processing of the encoded video data. Decoded video frames are stored in a frame buffer included in the video decoding unit 104.

Then, the synchronization control unit 111 changes the video frame output preparation completion flag to "1" (Step S207).

If the entry point does not correspond to the current video PTS (Step S205: NO), the video PTS judgment unit 107 performs gap judgment for judging whether a gap has occurred between the current video PTS and a video PTS of a previous video frame stored in the video PTS storage unit 106 (hereinafter a "previous video PTS") (Step S208). Here, this gap judgment is performed based on whether the following condition expression (Expression 2) is satisfied. If the (Expression 2) is satisfied, the flow proceeds to Step S209. If the (Expression 2) is not satisfied, the flow proceeds to Step S210. Regarding a first video frame, a previous video PTS corresponding to a video PTS of the first video frame is not stored in the video storage unit 106. Accordingly, this gap judgment is not performed on the first video frame. In the (Expression 2), Xv1 represents a threshold value that is externally set for performing gap judgment, and is desirably greater than the frame period.

$$\mathrm{(Expression\ 2)}$$

$$\mathrm{current\ PTS} - \mathrm{previous\ PTS} < 0\ \mathrm{or\ current\ PTS} - \mathrm{previous}$$

$$\mathrm{PTS} > \mathrm{Xv1}$$

If the (Expression 2) is satisfied (Step S208: YES), the video PTS judgment unit 107 judges that the previous video frame having the previous video PTS in which the gap has occurred is fail-safe data (Step S209). Then, the flow proceeds to Step S206.

If the (Expression 2) is not satisfied (Step S208: NO), the video decoding unit 104 performs skip processing and decoding processing of the encoded video data in accordance with an instruction issued by the video PTS judgment unit 107 (Step S210).

Then, the video PTS storage unit 106 sets the current video PTS as a previous video PTS (Step S211). That is, the video PTS storage unit 106 stores the current video PTS as a previous video PTS in order to use the current video PTS for performing gap judgment of a next video frame. Then, the flow returns to Step S203.

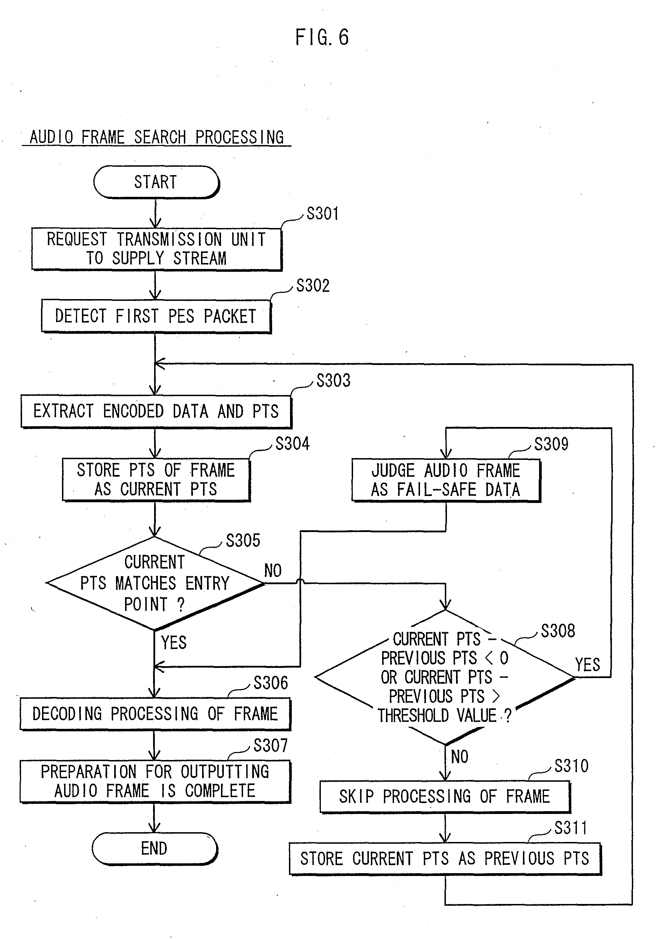

Next, FIG. 6 shows the following operations. An audio frame corresponding to an entry point from which playback is instructed to be started is searched for. If the audio frame corresponding to the entry point is lost, the most appropriate audio frame located near the lost audio frame is determined. Here, this most appropriate audio frame is referred to as "fail-safe data".

When an entry point of audio data is externally designated, the synchronization control unit 111 clears an audio frame output preparation completion flag to "0", and starts processing.

Firstly, in Step S301, the synchronization control unit 111 requests the transmission unit 101 to supply a stream. Upon being requested, the transmission unit 101 transmits a multiplexed stream including the entry point to the demultiplexing unit 102. The processing described so far is the same as the processing performed on video data as described above.

In Step S302, the demultiplexing unit 102 detects a first PES packet. Here, the first PES packet is a PES packet of a transmitted stream that firstly includes a PTS.

In Step 303, the demultiplexing unit 102 extracts encoded audio data and an audio PTS, and transmits the extracted encoded audio data to the audio decoding unit 103, and transmits the extracted audio PTS to the audio PTS acquisition unit 108.

In Step S304, the audio PTS acquisition unit 108 transmits, to the synchronization control unit 111 and the audio PTS storage unit 109, the audio PTS transmitted from the demultiplexing unit 102.

In Step S305, the synchronization control unit 111 compares the entry point that has been externally designated with an audio PTS currently acquired by the audio PTS acquisition unit 108 (hereinafter a "current audio PTS"), and performs audio entry point judgment for judging whether the entry point corresponds to an audio frame having the current audio PTS. If the entry point corresponds to an audio frame having the current audio PTS, the flow proceeds to Step S306.

If the entry point does not correspond to the audio frame having the current audio PTS, the flow proceeds to Step S308.

Here, this audio entry point judgment is performed based on whether the following condition expression (Expression 3) is satisfied. In the (Expression 3), EPa1 represents the entry point that has been externally designated, Ta1 represents a time period per frame, and PTSna1 represents the audio PTS extracted in Step S303. One time period per audio frame is used as Ta1. For example, one time period per frame is 42 ms for AAC24 kHz, and is 22 ms for AAC48 kHz. Note that this condition expression is just an example, and a method for performing the audio entry point judgment is not limited to this expression.

$$\text{(Expression 3)}$$

$$EPa1 - 1/2 \times Ta1 < PTSna1 \leqq EPa1 + 1/2 \times 1/2 \times Ta1$$

If the entry point corresponds to the current audio PTS (Step S305: YES), the synchronization control unit 111 transmits a decoding permission signal to the audio decoding unit 103 (Step S306). In accordance with the decoding permission signal transmitted from the synchronization control unit 111, the audio decoding unit 103 performs decoding processing of the encoded audio data. Decoded audio frames are stored in a frame buffer included in the audio decoding unit 103.

Then, the synchronization control unit 111 changes the audio frame output preparation completion flag to "1" (Step S307).

If the entry point does not correspond to the current audio PTS (Step S305: NO), the audio PTS judgment unit 110 performs gap judgment for judging whether a gap has occurred between the current audio PTS and an audio PTS of a previous audio frame stored in the audio PTS storage unit 109 (hereinafter a "previous audio PTS") (Step S308). Here, this gap judgment is performed based on whether the following condition expression (Expression 4) is satisfied. If the (Expression 4) is satisfied, the flow proceeds to Step S309. If the (Expression 4) is not satisfied, the flow proceeds to Step S310. Regarding a first audio frame, a previous audio PTS corresponding to a PTS of the first audio frame is not stored in the audio storage unit 109. Accordingly, this gap judgment is not performed on the first audio frame. In the (Expression 4), Xa1 represents a threshold value that is externally set for performing gap judgment, and is desirably greater than the frame period.

$$\text{(Expression 4)}$$

$$\text{current PTS} - \text{previous PTS} < 0 \text{ or current PTS } - \text{previous PTS} > Xa1$$

If the (Expression 4) is satisfied (Step S308: YES), the audio PTS judgment unit 110 judges that the previous audio frame having the previous audio PTS in which the gap has occurred is fail-safe data (Step S309). Then, the flow proceeds to Step S306.

If the (Expression 4) is not satisfied (Step S308: NO), the audio decoding unit 103 performs skip processing of the encoded audio data in accordance with an instruction issued by the audio PTS judgment unit 110 (Step S310).

Then, the audio PTS storage unit 109 sets the current audio PTS as a previous audio PTS (Step S311). That is, the audio PTS storage unit 109 stores the current audio PTS as a previous audio PTS in order to use the current audio PTS for performing gap judgment of a next audio frame. Then, the flow returns to Step S303.

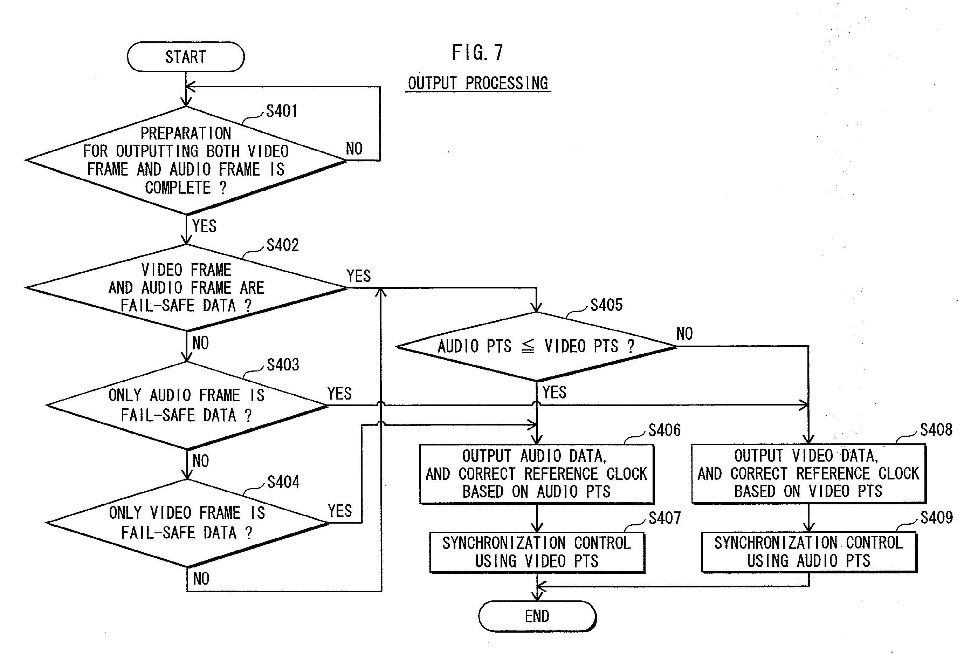

The following describes operations of the synchronization control unit 111 for determining a playback start video frame and a playback start audio frame and starting playback, with reference to the flow chart shown in FIG. 7. In Step S401, the synchronization control unit 111 waits until output preparation of both of a video frame and an audio frame from which playback is instructed to be started has completed. If the output preparation completes (Step S401: YES), the flow proceeds to Step S402.

If both of the video frame and the audio frame are fail-safe data (Step S402: YES), the flow proceeds to Step S405. Otherwise (Step S402: NO), the flow proceeds to Step S403.

If at least one of the video frame and the audio frame is not fail-safe data (Step S402: NO), and further if only the audio frame is fail-safe data (Step S403: YES), the flow proceeds to Step S408. Otherwise (Step S403: NO), the flow proceeds to Step S404.

If only the video frame is fail-safe data (Step S404: YES), the flow proceeds to Step S406. Otherwise (Step S404: NO), the flow proceeds to Step S405.

If both of the video frame and the audio frame are fail-safe data (Step S402: YES), or if both of the video frame and the audio frame are not fail-safe data (Step S404: NO), the synchronization control unit 111 compares an audio PTS of the audio frame with a video PTS of the video frame (Step S405). If the audio PTS is equal to or less than the video PTS (Step S405: YES), the synchronization control unit 111 determines to start the playback in the audio master mode, and the flow proceeds to Step S406. If the audio PTS is greater than the video PTS (Step S405: NO), the synchronization control unit 111 determines to start playback in the video master mode, and the flow proceeds to Step S408.

If determining to start the playback in the audio master mode (Step S405: YES), the synchronization control unit 111 instructs the audio decoding unit 103 to play back audio frames, and corrects the reference clock unit 112 based on the audio PTS (Step S406). The reference clock unit 112 is corrected based on the audio PTS at the frame period, which is a playback timing of the audio frames.

Then, the synchronization control unit 111 performs synchronization control based on a difference between the video PTS and an STC detected from the reference clock unit 112 (Step S407). If the video PTS matches the STC, the synchronization control unit 111 instructs the video decoding unit 104 to play back the video frames.

If determining to start the playback in the video master mode (Step S405: NO), the synchronization control unit 111 instructs the video decoding unit 104 to play back video frames, and corrects the reference clock unit 112 based on the video PTS (Step S408). The reference clock unit 112 is corrected based on the video PTS at the frame period, which is a playback timing of the video frames.

Then, the synchronization control unit 111 performs synchronization control based on a difference between the audio PTS and an STC detected from the reference clock unit 112 (Step S409). If the audio PTS matches the STC, the synchronization control unit 111 instructs the audio decoding unit 103 to play back the audio frames.

As have been described above, with the structure of the synchronous playback device 100 according to the first embodiment of the present invention, it is possible to perform the following processing. Even if a discontinuity has occurred due to a frame loss from a stream or a PTS bit error, the synchronous playback device 100 detects a gap between PTSs of audio frames or video frames at a time of starting playback, and stops searching for a lost audio frame or video frame corresponding to an entry point. Then, the synchronous playback device 100 determines the most appropriate frame (fail-safe data) located near the lost audio frame or video frame corresponding to the entry point, and starts playback of the stream from the fail-safe data.

(2. Second Embodiment)

The following describes a second embodiment of the present invention.

The second embodiment differs from the first embodiment in the following point. In the second embodiment, maximum time limits for searching data for a video frame and an audio frame corresponding to an entry point are determined beforehand. After a lapse of the maximum time limits, the searching is timed out.

The following describes the second embodiment, focusing on the difference from the first embodiment.

(2-1. Structure)

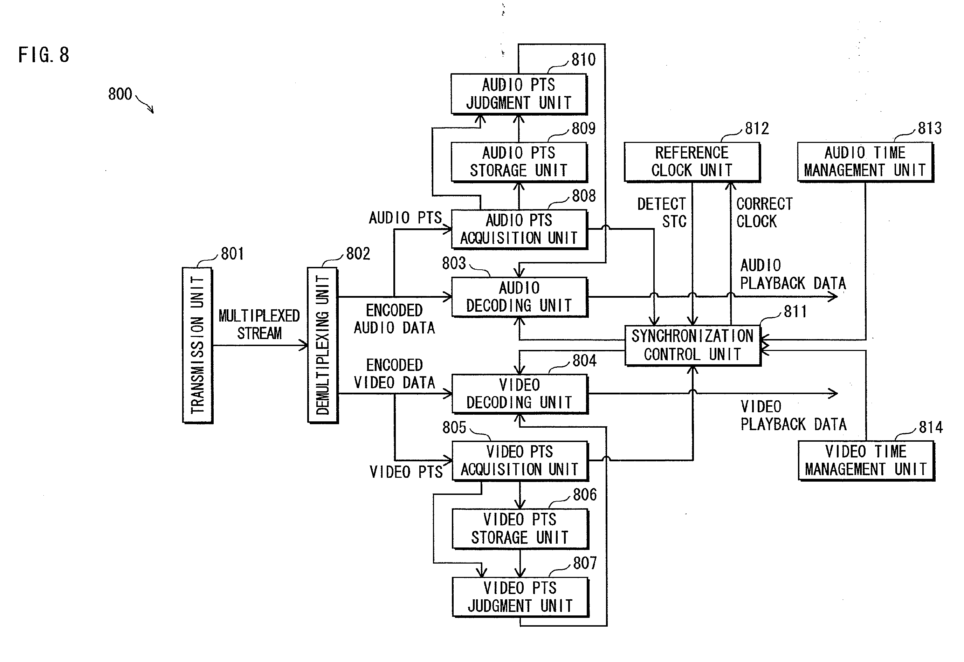

FIG. 8 shows the structure of a synchronous playback device 800 according to the second embodiment.

The synchronous playback device 800 includes a transmission unit 801, a demultiplexing unit 802, an audio decoding unit 803, an audio PTS acquisition unit 808, an audio PTS storage unit 809, an audio PTS judgment unit 810, a video decoding unit 804, a video PTS acquisition unit 805, a video PTS storage unit 806, a video PTS judgment unit 807, a synchronization control unit 811, a reference clock unit 812, an audio time management unit 813, and a video time management unit 814.

The transmission unit 801, the demultiplexing unit 802, the audio decoding unit 803, the audio PTS acquisition unit 808, the audio PTS storage unit 809, the audio PTS judgment unit 810, the video decoding unit 804, the video PTS acquisition unit 805, the video PTS storage unit 806, the video PTS judgment unit 807, the synchronization control unit 811, and the reference clock unit 812 respectively have the same functions of the transmission unit 101, the demultiplexing unit 102, the audio decoding unit 103, the audio PTS acquisition unit 108, the audio PTS storage unit 109, the audio PTS judgment unit 110, the video decoding unit 104, the video PTS acquisition unit 105, the video PTS storage unit 106, the video PTS judgment unit 107, the synchronization control unit 111, and the reference clock unit 112 that are included in the synchronous playback device 100 according to the first embodiment.

The audio time management unit 813 transmits an audio time-out signal to the synchronization control unit 811 at a preset time.

The video time management unit 814 transmits a video time-out signal to the synchronization control unit 811 at a preset time.

It is possible to separately determine a preset time for the audio time management unit 813 and the video time management unit 814.

(2-2. Operations)

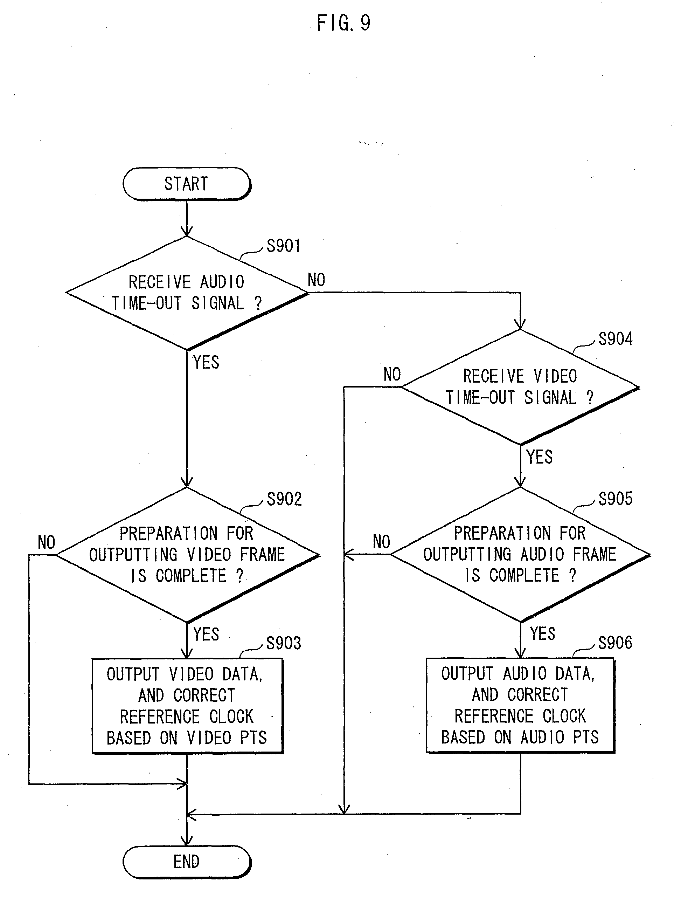

FIG. 9 is a flow chart showing time-out processing according to the second embodiment for searching for a frame corresponding to an entry point.

Operations for determining a playback start video frame are the same as those shown in FIG. 5 in the first embodiment.

Operations for determining a playback start audio frame are the same as those shown in FIG. 6 in the first embodiment. Also, operations for starting playback after determination of the playback start video frame the playback start audio frame are the same as those shown in FIG. 7 in the first embodiment.

The operations shown in FIG. 9 are performed in accordance with the operations shown in FIGs. 5 to 7.

Here, a time period preset for the video time management unit 814 is represented as Tev. A time period preset for the audio time management unit 813 is represented as Tea. Tev and Tea are each a time period enough for searching for a frame corresponding to an entry point.

If the synchronization control unit 811 receives an audio time-out signal from the audio time management unit 813 (Step S901: YES), the flow proceeds to Step S902. Otherwise (Step S901: NO), the flow proceeds to Step S904.

If the output preparation completion flag indicates "1" (Step S902: YES), the flow proceeds to Step S903. Otherwise (Step S902: NO), the processing ends.

If the output preparation completion flag indicates "1" (Step S902: YES), the synchronization control unit 811 instructs the video decoding unit 804 to play back video frames, and corrects the reference clock unit 812 based on the video PTS (Step S903). The reference clock unit 812 is corrected based on the video PTS at the frame period, which is a playback timing of the video frames.

If the synchronization control unit 811 does not receive an audio time-out signal from the audio time management unit 813 (Step S901: NO), and further if the synchronization control unit 811 receives a video time-out signal from the video time management unit 814 (Step S904: YES), the flow proceeds to Step S905. Otherwise (Step S904: NO), the processing ends.

If the audio output preparation completion flag indicates "1" (Step S905: YES), the flow proceeds to Step S906. Otherwise (Step S905: NO), the processing ends.

In Step S906, the synchronization control unit 811 instructs the audio decoding unit 803 to play back audio frames, and corrects the reference clock unit 812 based on the audio PTS. The reference clock unit 812 is corrected based on the audio PTS at the frame period, which is a playback timing of the audio frames.

As have been described above, with the structure of the synchronous playback device 800 according to the second embodiment of the present invention, maximum time limits for searching for an audio playback start frame and a video playback start frame corresponding to an entry point are separately managed. Accordingly, even if only one of the audio playback start frame and the video playback start frame is found, it is possible to output only the found frame without being influenced by a longer time period for searching for either one of the audio playback start frame and the video playback start frame than a time period for searching for the other. For example, suppose that a maximum time limit for searching for a video playback start frame is set to be longer than a maximum time limit for searching for an audio playback start frame. If the video playback start frame is found, it is possible to output the found video playback start frame after a lapse of the maximum time limit for searching for the audio playback start frame.

(3. Third Embodiment)

The following describes a third embodiment of the present invention.

The third embodiment differs from the first embodiment in the following point. In the third embodiment, a PCR (described later) included in a stream is used for searching for a video frame and an audio frame corresponding to an entry point.

The following describes the third embodiment, focusing on the difference from the first embodiment.

(3-1. Structure)

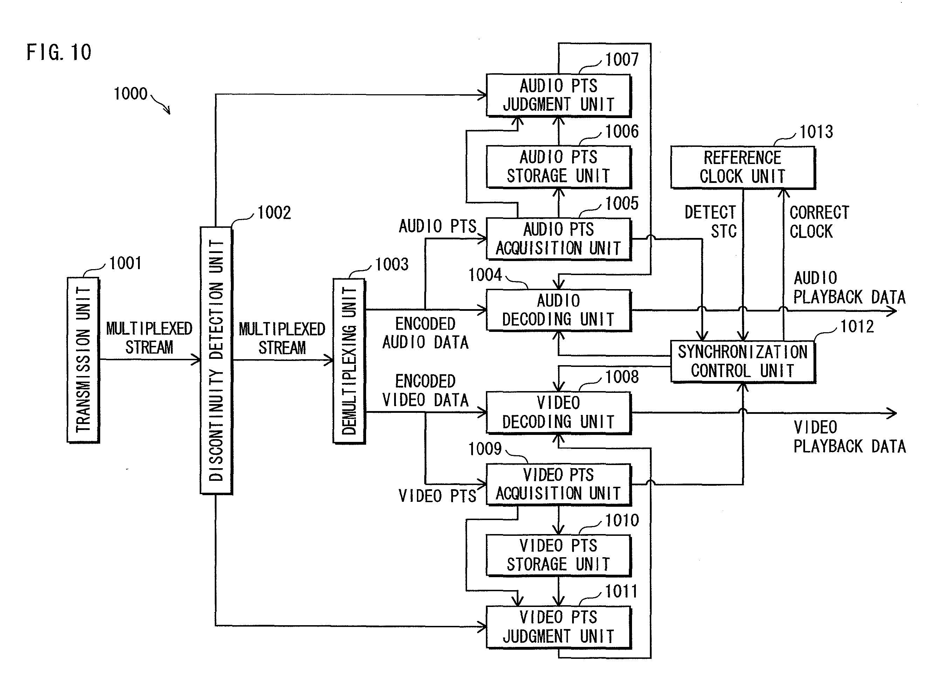

FIG. 10 shows the structure of a synchronous playback device 1000 according to the third embodiment.

The synchronous playback device 1000 includes a transmission unit 1001, a discontinuity detection unit 1002, a demultiplexing unit 1003, an audio decoding unit 1004, an audio PTS acquisition unit 1005, an audio PTS storage unit 1006, an audio PTS judgment unit 1007, a video decoding unit 1008, a video PTS acquisition unit 1009, a video PTS storage unit 1010, a video PTS judgment unit 1011, a synchronization control unit 1012, and a reference clock unit 1013.

The transmission unit 1001, the demultiplexing unit 1003, the audio decoding unit 1004, the audio PTS acquisition unit 1005, the audio PTS storage unit 1006, the audio PTS judgment unit 1007, the video decoding unit 1008, video PTS acquisition unit 1009, the video PTS storage unit 1010, the video PTS judgment unit 1011, the synchronization control unit 1012, and the reference clock unit 1013 respectively have the same functions of the transmission unit 101, the demultiplexing unit 102, the audio decoding unit 103, the audio PTS acquisition unit 108, the audio PTS storage unit 109, the audio PTS judgment unit 110, the video decoding unit 104, the video PTS acquisition unit 105, the video PTS storage unit 106, the video PTS judgment unit 107, the synchronization control unit 111, and the reference clock unit 112 that are included in the synchronous playback device 100 according to the first embodiment.

The discontinuity detection unit 1002 detects a discontinuity between PCRs of an MPEG2-TS. The discontinuity detection unit 1002 compares a PCR currently transmitted (hereinafter a "current PCR") with a PCR that has been previously transmitted (hereinafter a "previous PCR") included in PCRs transmitted at predetermined time intervals, and detects a discontinuity based on a difference between the current PCR and the previous PCR. The discontinuity detection unit 1002 notifies the video PTS comparison unit 1011 and the audio PTS comparison unit 1007 of the PCR in which a discontinuity is detected. Although not shown in the figure, the discontinuity detection unit 1002 includes therein a buffer for storing a PCR in which a discontinuity is detected.

(3-2. Data)

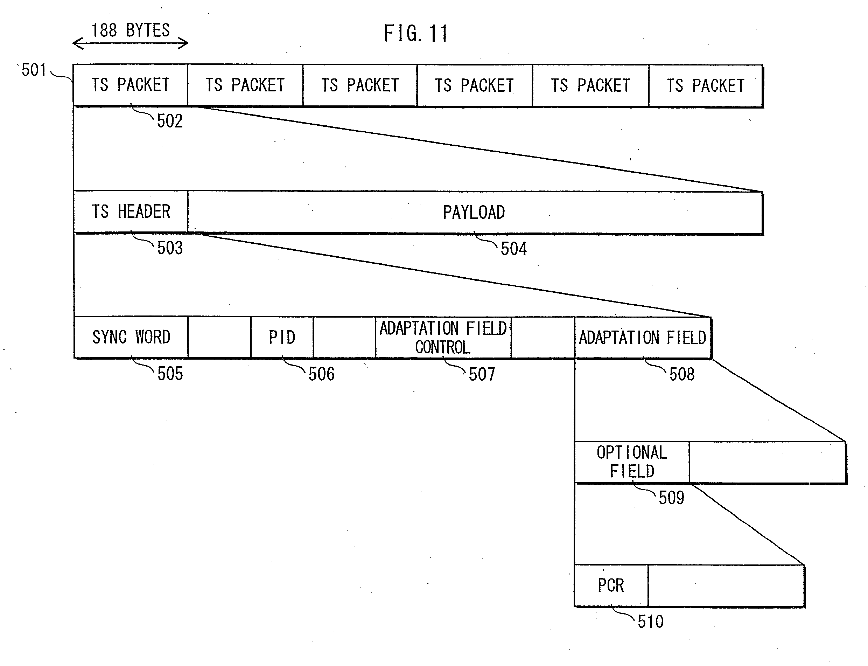

Here, PCRs of an MPEG2-TS stream is described with reference to FIG. 11.

As shown in FIG. 11, PCRs of an MPEG2-TS stream 501 are transmitted at predetermined time intervals in order to adjust the STC. A TS packet 501 included in the MPEG2-TS stream 501 includes an adaptation field 508 for transmitting additional information relating to the MPEG2-TS stream 501. A 6-byte PCR 510 is stored in an optional field 509 included in the adaptation field 508.

(3-3. Operations)

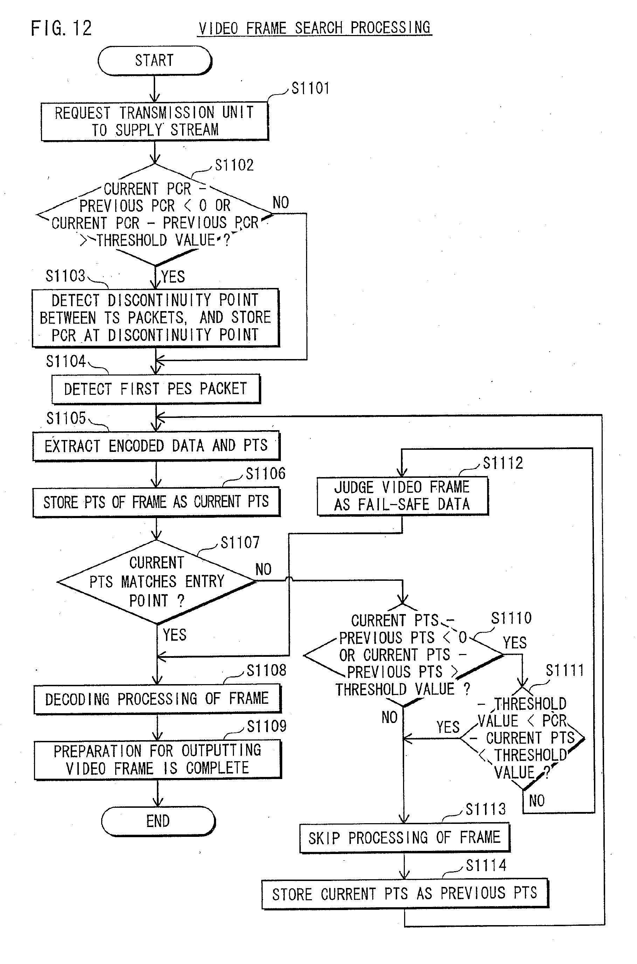

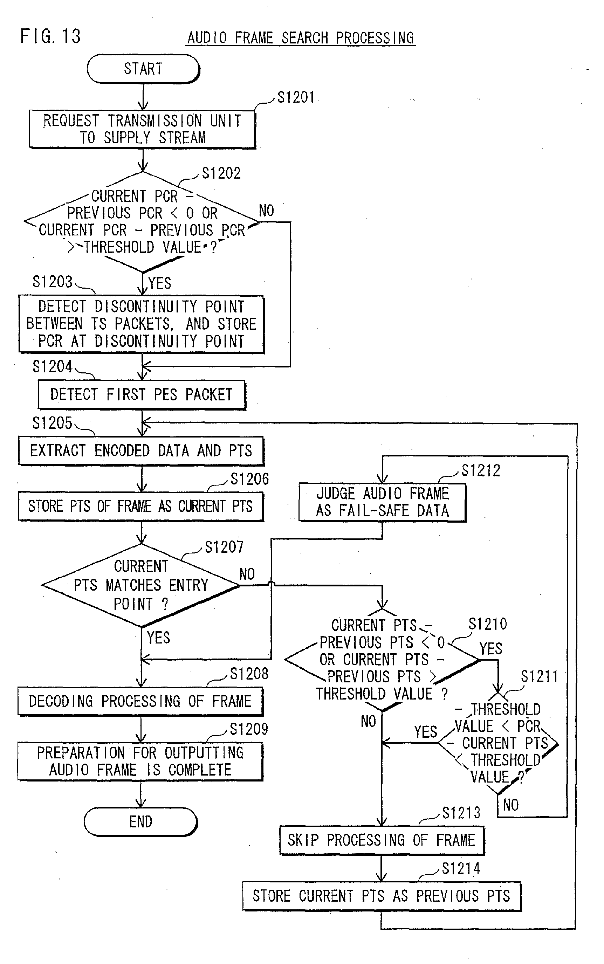

FIGs. 12 and 13 are flow charts showing an operation procedure for starting playback from an entry point performed by the synchronous playback device 1000 according to the third embodiment. Operations for starting the playback are described below in detail with reference to the flow charts shown in FIGs. 12 and 13.

Firstly, FIG. 12 shows the following operations. A video frame corresponding to an entry point from which playback is instructed to be started is searched for. If the video frame corresponding to the entry point is lost, the most appropriate video frame located near the lost video frame is determined. Here, this most appropriate video frame is referred to as "fail-safe data". When an entry point of video data is externally designated, the synchronization control unit 111 clears a video frame output preparation completion flag to "0", and starts processing.

Firstly, in Step S1101, the synchronization control unit 111 requests the transmission unit 1001 to supply a stream. Upon being requested, the transmission unit 1001 transmits a multiplexed stream including the entry point to the discontinuity detection unit 1002. The demultiplexing unit 1003 stores, in a buffer included therein, the multiplexed stream transmitted from the discontinuity detection unit 1002. The transmission unit 1001 manages overflows of the buffer included in the demultiplexing unit 1003. When overflows are likely to occur, the transmission unit 1001 stops transmitting a multiplexed stream. Then, when the buffer becomes available, the transmission unit 1001 restarts transmitting the multiplexed stream. The buffer is consumed in decoding processing of audio frames, decoding processing of audio frames, or decoding processing of video frames.

In Step S1102, the discontinuity detection unit 1002 searches PCRs of TS packets of the multiplexed stream for a discontinuity, and stores therein information indicating that the discontinuity has occurred. Discontinuity detection judgment for judging whether a discontinuity has occurred is performed based on whether the following condition expression (Expression 5) is satisfied. If the (Expression 5) is satisfied, the flow proceeds to Step S1103. If the (Expression 5) is not satisfied, the flow proceeds to Step S1104. In the (Expression 5), the current PCR represents a PCR of a TS packet that is currently detected. The previous PCR represents a PCR of a TS packet that has been previously detected. Ya represents a threshold value, and is desirably greater than the PCR transmission cycle.

$$\text{(Expression 5)}$$

$$\text{current PCR} - \text{previous PCR} < 0 \text{ or current PCR} - \text{previous}$$

$$\text{PCR} > \text{Ya}$$

If the current PCR and the previous PCR are discontinuous from each other (Step S1102: YES), the discontinuity detection unit 1002 stores therein a PCR which is a discontinuity point between TS packets, and transmits the PCR to the video PTS judgment unit 1011 (Step S1103). Also, the discontinuity detection unit 1002 transmits the multiplexed stream to the demultiplexing unit 1003.

Each time a stream is transmitted from the transmission unit 1001, the above PCR storage and discontinuity judgment in Steps S1102 and S1103 are performed.

If a transmitted PES packet is a first PES packet, the demultiplexing unit 1003 detects the transmitted PES packet as a first PES packet (Step S1104). Here, the first PES packet is a PES packet of a transmitted stream that firstly includes a PTS. If a transmitted PES packet is a PES packet following the first PES packet, the transmitted PES packet is not detected in Step S1104. Then, the flow proceeds to Step S1105.

Then, the demultiplexing unit 1003 extracts encoded video data and a video PTS, and transmits the extracted encoded video data to the video decoding unit 1008, and transmits the extracted video PTS to the video PTS acquisition unit 1009 (Step S1105).

The video PTS acquisition unit 1009 transmits, to the synchronization control unit 1012 and the video PTS storage unit 1010, the video PTS transmitted from the demultiplexing unit 1003 (Step S1106).

The synchronization control unit 1012 compares the entry point which has been externally designated with a current video PTS managed by the video PTS acquisition unit 1009, and performs video entry point judgment for judging whether the entry point corresponds to a video frame having the current video PTS (Step S1107). If the entry point corresponds to the video frame having the current video PTS (Step S1107: YES), the flow proceeds to Step S1108. If the entry point does not correspond to the video frame having the current video PTS, the flow proceeds to Step S1110.

Here, the video entry point judgment is performed based on whether the following condition expression (Expression 6) is satisfied. If the (Expression 6) is satisfied, the synchronization control unit 1012 judges that the video frame having the video PTS corresponds to the entry point. In the (Expression 6), $EPv3$ represents an entry point that has been externally designated, $Tv3$ represents a time period per frame, and $PTSnv3$ represents the video PTS extracted in Step S1105. One time period per video frame is used as $Tv3$. For example, one time period per frame is 66 ms for 15 fps, and is 33 ms for 30 fps. Note that this condition expression is just an example, and a method for performing the video entry point judgment is not limited to this condition expression.

$$\text{(Expression 6)}$$

$$EPv3 - 1/2 \times Tv3 < PTSnv1 \leqq EPv3 + 1/2 \times 1/2 \times Tv3$$

If the entry point corresponds to the current video PTS (Step S1107: YES), the synchronization control unit 1012 transmits a decoding permission signal to the video decoding unit 1008 (S1108). In accordance with the decoding permission signal transmitted from the synchronization control unit 1012, the video decoding unit 1008 performs decoding processing of the encoded video data. Decoded video frames are stored in a frame buffer included in the video decoding unit 1008.

Then, the synchronization control unit 111 changes the video frame output preparation completion flag to "1" (Step S1109).

If the entry point does not correspond to the current video PTS (Step S1107: NO), the video PTS judgment unit 1011 performs gap judgment for judging whether a gap has occurred between a current video PTS and a previous video PTS (Step S1110). Here, this gap judgment is performed based on whether the following condition expression (Expression 7) is satisfied. If the (Expression 7) is satisfied, the synchronization control unit 1012 judges that a gap has occurred in the video frame, and the flow proceeds to Step S1111. If the (Expression 7) is not satisfied, the flow proceeds to Step S1113. Regarding a first video frame, a previous video PTS corresponding to a video PTS of the first video frame is not stored in the video storage unit 1010. Accordingly, this gap judgment is not performed on the first video frame. In the (Expression 7), Xv3 represents a threshold value that is externally set for performing the gap judgment, and is desirably greater than the frame period.

(Expression 7)

current PTS - previous PTS < 0 or current PTS - previous

PTS > Xv3

If the (Expression 7) is satisfied (Step S1110: YES), the video PTS judgment unit 1011 compares the video PTS in which the gap has occurred with a PCR stored in the discontinuity detection unit 1002 in Step S1003 (Step S1111). If the following condition expression (Expression 8) is satisfied (Step S1111: YES), the flow proceeds to Step S1113. If the (Expression 8) is not satisfied (Step S1111: NO), the flow proceeds to Step S1112. In the (Expression 8), Z is desirably a value in consideration of a PCR transmission cycle of TS packets and interleaving between audio frames and video frames. For example, in the one-segment broadcasting, a PCR transmission cycle of TS packets is within 400 ms, an interleaving interval between audio frames and video frames is approximate 1.5 seconds. Accordingly, it is appropriate to set a value corresponding to approximate 2 seconds as Z.

(Expression 8)

-Z < PCR - current PTS < Z

If the (Expression 8) is not satisfied (Step S1111: NO), the video PTS judgment unit 1011 judges that the video frame having the video PTS in which the gap has occurred is fail-safe data (Step S1112). Then, the flow proceeds to Step S1108.

The video decoding unit 1008 performs skip processing and decoding processing of the encoded video data in accordance with an instruction issued by the video PTS judgment unit 1011 (Step S1113).

Then, the video PTS storage unit 1010 sets the current video PTS as a previous video PTS (Step S1114). That is, the video PTS storage unit 1010 stores the current video PTS as a previous video PTS in order to use the current video PTS for performing gap judgment of a next video frame. Then, the flow returns to Step S1105.

Next, FIG. 13 shows the following operations. An audio frame corresponding to an entry point from which playback is instructed to be started is searched for. If the audio frame corresponding to the entry point is lost, the most appropriate audio frame located near the lost audio frame is determined. Here, this most appropriate audio frame is referred to as "fail-safe data".

When an entry point of audio data is externally set, the synchronization control unit 111 clears an audio frame output preparation completion flag to "0", and starts processing.

Firstly, in Step S1201, the synchronization control unit 111 requests the transmission unit 1001 to supply a stream. Upon being requested, the transmission unit 1001 transmits a multiplexed stream including the entry point to the discontinuity detection unit 1002.

In Step S1202, the discontinuity detection unit 1002 searches PCRs of TS packets of the multiplexed stream for a discontinuity, and stores therein information indicating that the discontinuity has occurred. Discontinuity detection judgment for judging whether a discontinuity has occurred is performed based on whether the (Expression 5) is satisfied. If the (Expression 5) is satisfied, the flow proceeds to Step S1203. If the (Expression 5) is not satisfied, the flow proceeds to Step S1204.

If a current PCR and a previous PCR are discontinuous from each other (Step S1202: YES), the discontinuity detection unit 1002 stores therein a PCR which is a discontinuity point between TS packets, and transmits the PCR to the audio PTS judgment unit 1007 (Step S1203). Also, the discontinuity detection unit 1002 transmits the multiplexed stream to the demultiplexing unit 1003.

Each time a stream is transmitted from the transmission unit 1001, the above PCR storage and discontinuity judgment in Steps S1202 and S1203 are performed.

If a transmitted PES packet is a first PES packet, the demultiplexing unit 1003 detects the transmitted PES packet as a first PES packet (Step S1204). Here, the first PES packet is a PES packet of a transmitted stream that firstly includes a PTS. If a transmitted PES packet is a PES packet following the first PES packet, the transmitted PES packet is not detected in Step S1204. Then, the flow proceeds to Step S1205.

Then, the demultiplexing unit 1003 extracts encoded audio data and an audio PTS, and transmits the extracted encoded audio data to the audio decoding unit 1004, and transmits the extracted audio PTS to the audio PTS acquisition unit 1005 (Step S1205).

The audio PTS acquisition unit 1005 transmits, to the synchronization control unit 1012 and the audio PTS storage unit 1006, the audio PTS transmitted from the demultiplexing unit 1003 (Step S1206).

The synchronization control unit 1012 compares the entry point which has been externally designated with a current audio PTS managed by the audio PTS acquisition unit 1005, and performs audio entry point judgment for judging whether the entry point corresponds to an audio frame having the current audio PTS (Step S1207). If the entry point corresponds to the audio frame having the current audio PTS (Step S1207: YES), the flow proceeds to Step S1208.

If the entry point does not correspond to the audio frame having the current audio PTS (Step S1207: NO), the flow proceeds to Step S1210.

Here, the audio entry point judgment is performed based on whether the following condition expression (Expression 9) is satisfied. In the (Expression 9), EPa3 represents an entry point that has been externally designated, Ta3 represents a time period per frame, and PTSna3 represents the audio PTS extracted in Step S1205. One time period per audio frame is used as Ta3. For example, one time period per frame is 42 ms for AAC24 kHz, and is 22 ms for AAC48 kHz. Note that this condition expression is just an example, and a method for performing the audio entry point judgment is not limited to this condition expression.

(Expression 9)

$$EPa3 - 1/2 \times Ta3 < PTSna3 \leqq EPa3 + 1/2 \times 1/2 \times Ta3$$

If the entry point corresponds to the current audio PTS (Step S1207: YES), the synchronization control unit 1012 transmits a decoding permission signal to the audio decoding unit 1004 (S1208). In accordance with the decoding permission signal transmitted from the synchronization control unit 1012, the audio decoding unit 1004 performs decoding processing of the encoded audio data. Decoded video frames are stored in a frame buffer included in the audio decoding unit 1004.

Then, the synchronization control unit 111 changes the audio frame output preparation completion flag to "1" (Step S1209).

If the entry point does not correspond to the current audio PTS (Step S1207: NO), the audio PTS judgment unit 1007 performs gap judgment for judging whether a gap has occurred between a current audio PTS and a previous audio PTS (Step S1210). Here, this gap judgment is performed based on whether the following condition expression (Expression 10) is satisfied. If the (Expression 10) is satisfied, the synchronization control unit 1012 judges that a gap has occurred in the audio frame, and the flow proceeds to Step S1211. If the (Expression 10) is not satisfied, the flow proceeds to Step S1213. Regarding a first audio frame, a previous audio PTS corresponding to an audio PTS of the first audio frame is not stored in the audio storage unit 1006. Accordingly, this gap judgment is not performed on the first audio frame. In the (Expression 10), Xa3 represents a threshold value that is externally set for performing the gap judgment, and is desirably greater than the frame period.

(Expression 10)

$$current\ PTS - previous\ PTS < 0\ or\ current\ PTS - previous$$

$$PTS > Xa3$$

If the (Expression 10) is satisfied (Step S1210: YES), the audio PTS judgment unit 1007 compares the audio PTS in which the gap has occurred with a PCR stored in the discontinuity detection unit 1002 in Step S1203 (Step S1211). If the (Expression 8) is satisfied (Step S1211: YES), the flow proceeds to Step S1213. If the (Expression 8) is not satisfied (Step S1211: NO), the flow proceeds to Step S1212.

If the (Expression 8) is not satisfied (Step S1211: NO), the audio PTS judgment unit 1007 judges that the audio frame having the audio PTS in which the gap has occurred is fail-safe data (Step S1212). Then, the flow proceeds to Step S1208.

The audio decoding unit 1004 performs skip processing and decoding processing of the encoded audio data in accordance with an instruction issued by the audio PTS judgment unit 1007 (Step S1213).

Then, the audio PTS storage unit 1006 sets the current audio PTS as a previous audio PTS (Step S1214). That is, the audio PTS storage unit 1006 stores the current audio PTS as a previous audio PTS in order to use the current audio PTS for performing gap judgment of a next audio frame. Then, the flow returns to Step S1205.

Note that Operations for starting playback after determination of a playback start video frame and a playback start audio frame are the same as the operations shown in FIG. 7 in the first embodiment.

As have been described above, the synchronous playback device 1000 according to the third embodiment of the present invention detects occurrence of a discontinuity between TS packets using the PCR. Accordingly, it is possible to distinguish a discontinuity caused by data loss of TS packets from a discontinuity caused by PTS bit errors. Since a discontinuity caused by data loss of TS packets may be detected using methods other than the method described in the present specification (for example, using software in the upper layer), a portion corresponding to the loss data is considered not to be designated as an entry point. According to the third embodiment, if a discontinuity caused by data loss of TS packets is detected, it is possible to continue playback start frame search processing, without suspending the search processing and starting playback from fail-safe data.

(4. Fourth Embodiment)

The following describes a fourth embodiment of the present invention.

A synchronous playback device according to the fourth embodiment has the same structure as that of the synchronous playback device 100 according to the first embodiment. However, the fourth embodiment differs from the first embodiment in the following point. In the fourth embodiment, processing relating to frame loss is performed during playback of video frames and audio frames. Description of the structure of the synchronous playback device according to the fourth embodiment that is the same as that of the synchronous playback device 100 as shown in FIG. 1 is omitted here. The operations during playback are mainly described.

(4-1. Structure)

The following describes the different structure between the first embodiment and the fourth embodiment.

During playback, the demultiplexing unit 102 separates a multiplexed stream transmitted from the transmission unit 101 into video PES data and audio PES data. The demultiplexing unit 102 extracts a video PTS and encoded video data from the video PES data, and then transmits the extracted video PTS and encoded video data to the video decoding unit 104 and the video PTS acquisition unit 105. Also, the demultiplexing unit 102 extracts an audio PTS and encoded audio data from the audio PES data, and then transmits the extracted audio PTS and encoded audio data to the audio decoding unit 103 and the audio PTS acquisition unit 108.

The audio decoding unit 103 includes therein a unique clock, and operates at the frame period. At a head of the frame period, the audio decoding unit 103 acquires encoded audio data corresponding to one audio frame, and performs operations relating to decoding processing in accordance with a control signal transmitted from the synchronization control unit 111.

Specifically, if receiving a decoding permission signal from the synchronization control unit 111, the audio decoding unit 103 performs decoding processing, and outputs a result of the decoding processing. If receiving a decoding suspension signal from the synchronization control unit 111, the audio decoding unit 103 suspends decoding processing and outputting a result of the decoding processing.. Also, if receiving a frame discard signal from the synchronization control unit 111, the audio decoding unit 103 discards encoded audio data corresponding to a current audio frame, and immediately acquires encoded audio data corresponding to a next audio frame. Then, the audio decoding unit 103 performs processing in accordance with a next signal transmitted from the synchronization control unit 111.

Like the audio decoding unit 103, the video decoding unit 104 includes therein a unique clock, and operates at the frame period. At a head of the frame period, the video decoding unit 104 acquires encoded video data corresponding to one video frame, and performs operations relating to decoding processing in accordance with a control signal transmitted from the synchronization control unit 111. Specifically, if receiving a decoding permission signal from the synchronization control unit 111, the video decoding unit 104 performs decoding processing, and outputs a result of the decoding processing. At the same time, the video decoding unit 104 acquires encoded video data corresponding to a next video frame. If receiving a decoding suspension signal from the synchronization control unit 111, the video decoding unit 104 suspends decoding processing and outputting a result of the decoding processing. Also, if receiving a frame discard signal from the synchronization control unit 111, the video decoding unit 104 decodes encoded video data corresponding to a current video frame, and then acquires encoded video data corresponding to a next video frame. Then, the video decoding unit 104 performs processing in accordance with a next signal transmitted from the synchronization control unit 111.

Here, the video decoding unit 104 performs decoding processing because of the following reason even if the frame discard signal is received.

It is necessary to perform decoding processing of compression-encoded video data such as MPEG compression-encoded video data by referring to previous frames. Accordingly, there is a possibility that if data corresponding to a frame is discarded without being decoded, a frame following the discarded frame cannot be normally decoded.

The audio PTS acquisition unit 108 acquires an audio PTS transmitted from the demultiplexing unit 102, and transmits the acquired audio PTS to the synchronization control unit 111 at a time when the audio decoding unit 103 acquires encoded audio data.

The video PTS acquisition unit 105 acquires a video PTS transmitted from the demultiplexing unit 102, and transmits the acquired video PTS to the synchronization control unit 111 at a time when the video decoding unit 104 acquires encoded video data.

Upon acquiring the audio PTS from the audio PTS acquisition unit 108, the synchronization control unit 111 detects the reference clock (hereinafter, also referred to as an "STC") from the reference clock unit 112. The synchronization control unit 111 compares the STC with the audio PTS, and transmit a control signal to the audio decoding unit 103. Also, upon acquiring the video PTS from the video PTS acquisition unit 105, the synchronization control unit 111 detects the STC from the reference clock unit 112. The synchronization control unit 111 compares the STC with the video PTS, and transmit a control signal to the video decoding unit 104.

Also, if judging that a PTS of data corresponding to a current master mode is synchronous with the STC, the synchronization control unit 111 transmits a PTS for correcting the reference clock to the reference clock unit 112. Furthermore, the synchronization control unit 111 manages whether a current master mode is the audio master mode or the video master mode, and also manages playback statuses respectively indicating whether audio and video are synchronous with the reference clock.

The reference clock unit 112 receives a PTS transmitted from the synchronization control unit 111, and corrects the reference clock based on the received PTS.

(4-2. Operations)

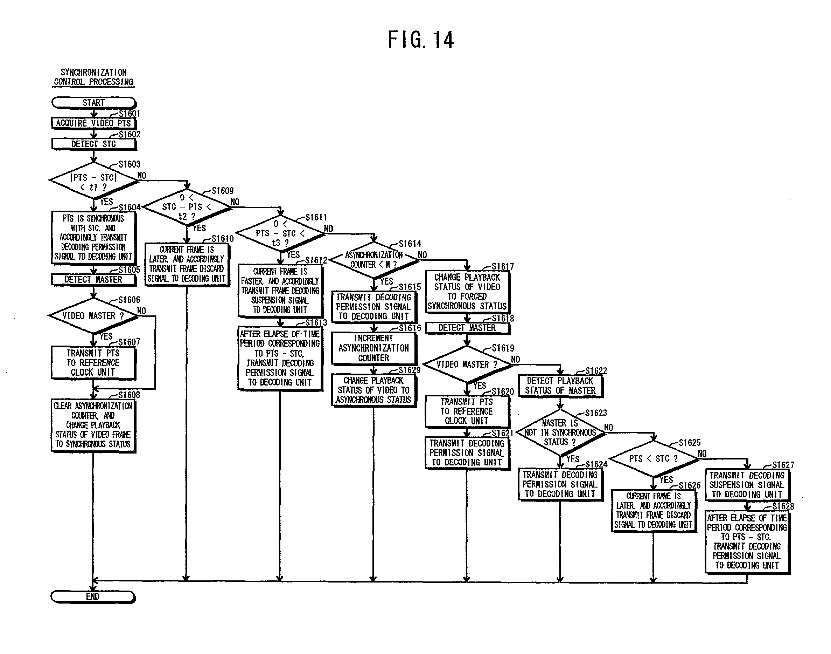

The following describes synchronization control processing performed by the synchronization control unit 111 with reference to a flow chart shown in FIG. 14. Although synchronization control of decoding processing of encoded video data is described here, it is of course possible to apply this synchronization control to decoding processing of encoded audio data. In such a case, portions represented as "video" and portions represented as "audio" in FIG. 14 are replaced with each other.

As shown in FIG. 14, operations start at a time when the video PTS acquisition unit 105 transmits a video PTS to the synchronization control unit 111.

The synchronization control unit 111 acquires the video PTS transmitted from the video PTS acquisition unit 105 (Step S1601).

The synchronization control unit 111 detects an STC that is a current time from the reference clock unit 112 (Step S1602).

Then, the synchronization control unit 111 judges whether the following condition expression (Expression 11) is satisfied (Step S1603).

$$\text{(Expression 11)}$$

$$|PTS - STC| < t1$$

Here, a threshold value $t1$ is a fixed value that can be determined for each system or data.

If the (Expression 11) is satisfied (Step S1603: YES), the synchronization control unit 111 judges that the video PTS is synchronous with the STC. The flow proceeds to Step S1604. If the (Expression 11) is not satisfied (Step S1603: NO), the synchronization control unit 111 judges that the video PTS is not synchronous with the STC. The flow proceeds to Step S1609 for performing lost synchronization processing.

Here, there is a case where a plurality of audio frames or video frames are included in one PES packet. In this case, a PTS transmitted from the demultiplexing unit 102 corresponds to "i" that is a first frame of the PES packet. Accordingly, "i+1" and "i+2" that are frames following the first frame of the PES packet correspond to no PTS. In such case, the video PTS acquisition unit 105 interpolates a video PTS of a video frame corresponding to no video PTS using a parameter relating to a frame rate of the video frame or a predetermined frame rate. In a case of an audio frame, the audio PTS acquisition unit 108 similarly interpolates an audio PTS in an audio frame corresponding to no audio PTS using a parameter of the audio frame relating to a frame rate or a predetermined frame rate.

The (Expression 11) means the following.

In order to be synchronous with a video frame, it is necessary to start outputting the video frame at a time when the STC matches a PTS. However, there is a possibility that reading processing of the STC using software might cause variation in processing time period. Accordingly, it is difficult to accurately read a time when the STC matches a PTS. Therefore, if the (Expression 11) is satisfied, the synchronization control unit 111 instructs the video decoding unit 104 to perform decoding processing by making redundancy in the judgment processing.

If the (Expression 11) is satisfied (Step S1603: YES), the synchronization control unit 111 transmits a decoding permission signal to the video decoding unit 104 (Step S1604). In accordance with the decoding permission signal, the video decoding unit 104 performs decoding processing, and outputs audio playback data that is a result of the decoding processing.

The synchronization control unit 111 detects the current master mode (Step S1605).

If the current master mode is the video master mode (Step S1606: YES), the synchronization control unit 111 transmits, to the reference clock unit 112, a PTS judged to be synchronous (Step S1607). The reference clock unit 112 corrects the reference clock based on the transmitted PTS.

If the current master mode is not the video master mode (Step S1606: NO), the flow proceeds to Step S1608. Since the PTS is judged to be synchronous with the reference clock, the synchronization control unit 111 clears an asynchronization counter (later described), and changes the video playback status to a synchronous status (Step S1608). Then, the synchronization control processing ends.

If the (Expression 11) is not satisfied (Step S1603: NO), the synchronization control unit 111 judges whether the following condition expression (Expression 12) is satisfied (Step S1609).

$$\text{(Expression 12)}$$

$$0 < STC - PTS < t2$$

Here, a threshold value t2 is a fixed value that can be determined for each system or data.

If the (Expression 12) is satisfied (Step S1609: YES), a frame to be decoded is already later than a playback time. Accordingly, the video decoding unit 104 discards the frame, and immediately performs processing of a next frame so as to make up for a lost time period. That is, the synchronization control unit 111 transmits a frame discard signal to the video decoding unit 104 (Step S1610). Then, the processing ends.

In the fourth embodiment, if a frame to be decoded is already later, the synchronization control unit 111 instructs the video decoding unit 104 to discard data corresponding to one frame. However, if a frame to be decoded is greatly later than the STC, the synchronization control unit 111 may instruct the video decoding unit 104 to discard data corresponding to a plurality of frames.

If the (Expression 12) is not satisfied (Step S1609: NO), the flow proceeds to Step S1611.

The synchronization control unit 111 judges whether the following condition expression (Expression 13) is satisfied (Step S1611).

$$\text{(Expression 13)}$$

$$0 < (PTS - STC) < t3$$

Here, a threshold value t3 is a fixed value that can be determined for each system or data.

If the (Expression 13) is satisfied (Step S1611: YES), a frame to be decoded is faster than a playback time. Accordingly, the video decoding unit 104 suspends decoding processing of the frame so as to clear up an advanced time period. That is, the synchronization control unit 111 transmits a decoding suspension signal to the video decoding unit 104 (Step S1612).

After a lapse of a difference time period between the PTS and the STC, the synchronization control unit 111 transmits a decoding permission signal to the video decoding unit 104 (Step S1613).

If the (Expression 13) is not satisfied (Step S1611: NO), there is a possibility that a PTS error or a discontinuity might occur. The flow proceeds to Step S1614 for asynchronization processing.

The following is performed in the asynchronization processing.

The synchronization control unit 111 judges whether the following condition expression (Expression 14) relating to the asynchronization counter is satisfied (Step S1614).

$$\text{(Expression 14)}$$

$$\text{value of asynchronization counter} < M$$

Here, the asynchronization counter counts the number of frames on which asynchronization processing has been performed in a case where any of the judgments performed in Steps S1603, S1609, and S1611 is not satisfied. When starting counting, or if the (Expression 11) in Step S1603 is satisfied, that is if the synchronization control unit 111 judges that the STC is synchronous with the PTS, the synchronization control unit 111 clears the asynchronization counter to "0".

In the (Expression 14), a threshold value M is a fixed value that can be determined for each system or data.

If the (Expression 14) is satisfied (Step S1614: YES), the synchronization control unit 111 transmits a decoding permission signal to the video decoding unit 104 (Step S1615) . In accordance with the decoding permission signal, the video decoding unit 104 performs decoding processing and output processing of the video frame.

Then, the synchronization control unit 111 increments the asynchronization counter by 1 (Step S1616).

The synchronization control unit 111 changes the video playback status to an asynchronous status (Step S1629). Then, the synchronization control processing ends.

If the (Expression 14) is not satisfied (Step S1614: NO), the flow proceeds to Step S1617 for forced synchronization processing.

The asynchronization counter is used for the following reason.

If there is a great difference time period between the STC and the PTS, it is impossible to judge whether a temporal discontinuity has occurred in one of an audio frame and a video frame or a PTS error has occurred. If the number of continuous frames whose difference time period therebetween is less than a predetermined number of frames (M frames in the above (Expression 14)), the synchronization control unit 111 judges that a PTS error has occurred, and performs asynchronization processing. If the number of continuous frames whose difference time period therebetween is no less than the predetermined number of frames, the synchronization control unit 111 judges that a temporal discontinuity has occurred, and performs forced synchronization processing.

The following is performed in the forced synchronization processing.

The synchronization control unit 111 changes the video playback status to a forced synchronous status (Step S1617).

The synchronization control unit 111 detects a current master mode (Step S1618).

The synchronization control unit 111 judges whether the current master mode is the video master mode (Step S1619). If the current master mode is the video master mode (Step S1619: YES), the synchronization control unit 111 transmits the PTS to the reference clock unit 112 (Step S1620). The reference clock unit 112 corrects the reference clock based on the transmitted PTS. That is, the forced synchronization processing means correction of the reference clock.

The synchronization control unit 111 transmits a decoding permission signal to the video decoding unit 104 (Step S1621). Then, the processing ends.

If the current master mode is not the video master mode (Step S1619: NO), the flow proceeds to Step S1622.

The synchronization control unit 111 detects the playback status of a stream corresponding to the current master (Step S1622).

The synchronization control unit 111 judges whether the playback status of the current master is not a synchronous status (Step S1623).

If the playback status of a stream corresponding to the current master is not a synchronous status (Step S1623: YES), the synchronization control unit 111 transmits a decoding permission signal to the video decoding unit 104 (Step S1624). Then, the processing ends.

Here, the judgment of the playback status of a stream corresponding to the current master is performed for the following reason.

If the playback status of a stream corresponding to the current master is not a synchronous status, but an asynchronous status or a forced synchronous status, the current master mode is not in a synchronous status. In such a case, the reference clock is not corrected based on a PTS relating to the current master mode. Accordingly, it is necessary to wait until the playback status of a stream corresponding to the current master has changed to a synchronous status.

If the playback status of a stream corresponding to the current master is a synchronous status (Step S1623: NO), the synchronization control unit 111 judges whether the following condition expression (Expression 15) is satisfied (Step S1625).

$$\text{(Expression 15)}$$

$$\text{PTS} < \text{STC}$$

If the (Expression 15) is satisfied, that is, if the STC is greater than the PTS (Step S1625: YES), the PTS is later than the PTS. The synchronization control unit 111 transmits a frame discard signal to the video decoding unit 104 (Step S1626). Then, the processing ends.

If the (Expression 15) is not satisfied, that is, if the PTS is greater than the STC (Step S1625: NO), the synchronization control unit 111 transmits a decoding suspension signal to the video decoding unit 104 (Step S1627). In Step S1628, after a lapse of a difference time period between the PTS and the STC, the synchronization control unit 111 transmits a decoding permission signal to the video decoding unit 104 (Step S162). Then, the processing ends.

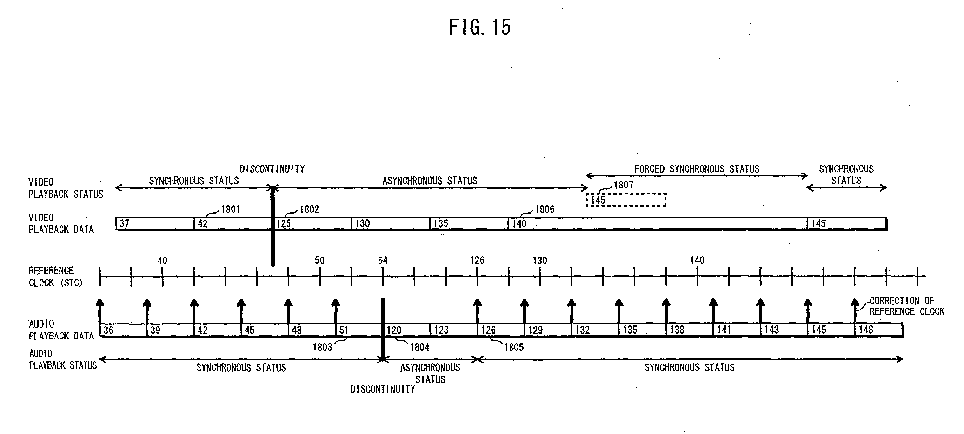

The operations shown in the flow chart of FIG. 14 are described in detail with reference to a timing chart shown in FIG. 15.

FIG. 15 is a timing chart showing a case where the fourth embodiment is applied to a video stream and an audio stream in which a temporal discontinuity has occurred.

In FIG. 15, video playback data and audio playback data are represented per frame. A number applied to each frame represents a PTS. For example, a PTS of a video frame 1801 is 42. FIG. 15 shows an operation in the audio master mode as an example. Accordingly, the reference clock is corrected based on a PTS of each audio frame. A display period for video frames is 5, and a display period for audio frames is 3. Temporal gaps have occurred between the video frame 1801 and a video frame 1802, and between an audio frame 1803 and an audio frame 1804. Also, the threshold value t3 in the (Expression 13) is 10 for video and audio. The threshold value M in the (Expression 14) is 5 for video, and is 3 for audio.

During playback in which video and audio are in a synchronous status, a discontinuity occurs in the video frame 1802. At this time, a difference between the video frame 1802 and the reference clock is 78, and is greater than 10 which is the threshold value t3 in the (Expression 13). Also, the value of the asynchronization counter is "0". Therefore, video asynchronization processing is performed.

Then, a discontinuity occurs in the audio frame 1804. Although the current master mode is the audio master mode, synchronization control processing is performed, like the case of video.

A difference between the audio frame 1804 and the reference clock is 66, and is greater than 10 which is the threshold value t3 in the (Expression 13). Also, the value of the asynchronization counter is "0". Therefore, audio asynchronization processing is performed.

While the audio asynchronization processing is performed, the reference clock is not corrected. Accordingly, the reference clock increases in an asynchronous status.

Then, since the value of the asynchronization counter at an audio frame 1805 is "3", the (Expression 14) is not satisfied. Accordingly, forced synchronization processing is performed. Since the current master mode is the audio mater mode, the reference clock is corrected. As a result, the reference clock is 126.

Then, synchronization processing of a video frame 1806 is performed. As a result, the audio playback status is changed to the synchronous status, and the reference clock is corrected. However, a difference between the video frame 1806 and the reference clock is still 12, and is greater than 10 which is the threshold value t3 in the (Expression 13). Accordingly, the asynchronization processing continues to be performed.

The value of the asynchronization counter at a video frame 1807 is "5", and the (Expression 14) is not satisfied. Accordingly, forced synchronization processing is performed. A difference between the PTS of the video frame 1807 and the STC is 12. Accordingly, decoding processing of the video frame 1807 is suspended, and a lapse of a time period corresponding to 12 time periods per frame is waited for. While waiting for the lapse of the time period, the video frame 1806 is displayed. After the lapse of the time period corresponding to 12 time periods per frame, the video frame 1807 is decoded, and the decoded video frame 1807 is displayed. Then, the video is played back in synchronization with the reference clock.

As have been described above, with the structure of the synchronous playback device according to the fourth embodiment of the present invention, even if a temporal discontinuity occurs in either one or both of an audio stream and a video stream included in a multiplexed stream recorded under a bad radio wave condition, it is possible to continue playback of the multiplexed stream. Furthermore, it is possible to perform playback of audio frames and video frames in synchronization with each other after passing through a discontinuity point in which the discontinuity has occurred.

Moreover, by providing the asynchronization counter, whether to perform asynchronization processing or forced synchronization processing can be judged based on the threshold value. Accordingly, even if a PTS error due to transmission error for example makes it impossible to achieve synchronization, the synchronous playback device does not judge that a discontinuity has occurred, and performs asynchronization processing. Accordingly, it is possible to continuously play back the audio and the video without interruption.

(5. Fifth Embodiment)

The following describes a fifth embodiment of the present invention.

A synchronous playback device according to the fifth embodiment has the same structure and the same basic operations as those of the synchronous playback device according to the fourth embodiment. However, the fifth embodiment differs from the fourth embodiment in the following point. In the fifth embodiment, synchronization control processing performed during playback includes modified forced synchronization processing. The following mainly describes the different operations between the fourth embodiment and the fifth embodiment.

(5-1. Operations)

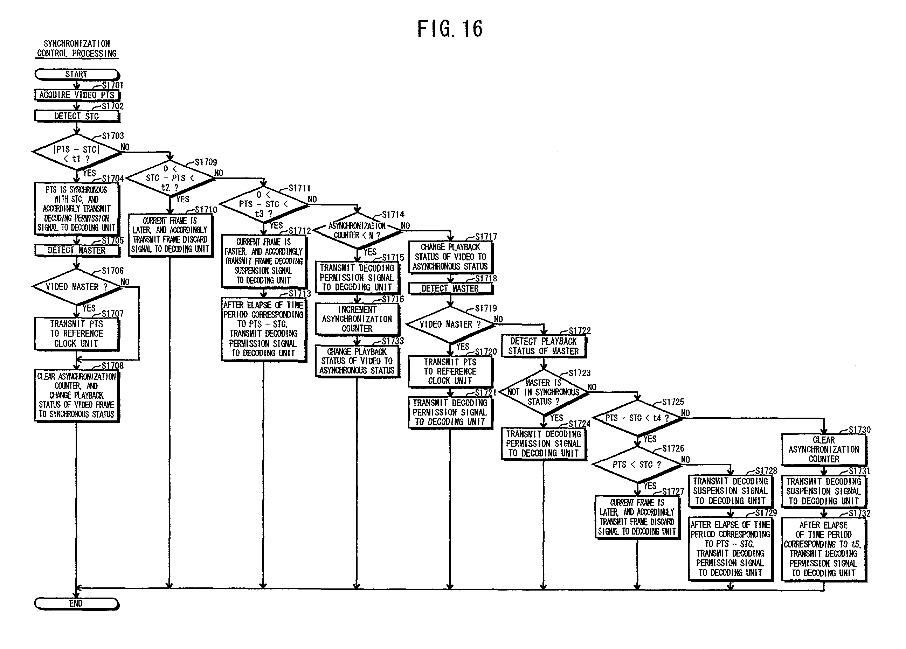

The operations of the synchronous playback device according to the fifth embodiment are described with reference to FIG. 16.

Although synchronization control of decoding processing of encoded video data is described here, it is of course possible to apply this synchronization control to decoding processing of encoded audio data. In such a case, portions represented as "video" and portions represented as "audio" in FIG. 16 are replaced with each other.

FIG. 16 is a flow chart showing the synchronous playback device according to the fifth embodiment.

The descriptions of the operations in Steps S1701 to S1716 are omitted because of being the same as those of Steps S1601 to S1616 shown in FIG. 14 according to the fourth embodiment.

The following describes forced synchronization processing starting from Step S1717 in detail with reference to FIG. 16. Since video is judged to be asynchronous, the synchronization control unit 111 changes the video playback status to an asynchronous status (Step S1717).

The synchronization control unit 111 detects a current master mode (Step S1718).

The synchronization control unit 111 judges whether the current master mode is the video master mode (Step S1719). If the current master mode is the video master mode (Step S1719: YES), the synchronization control unit 111 transmits a PTS to the reference clock unit 112 (Step S1720). The reference clock unit 112 corrects the reference clock based on the transmitted PTS.

Then, the synchronization control unit 111 transmits a decoding permission signal to the video decoding unit 104 (Step S1721). Then, the processing ends.

If the current master mode is not the video master mode (Step S1719: NO), the flow proceeds to Step S1722. The synchronization control unit 111 detects the playback status of a stream corresponding to the current master (Step S1722).

The synchronization control unit 111 judges whether the playback status of a stream corresponding to the current master is not the synchronous status (Step S1723).

If the playback status of a stream corresponding to the current master is not the synchronous status (Step S1723: YES), the synchronization control unit 111 transmits a decoding permission signal to the video decoding unit 104 (Step S1724). Then, the processing ends.

If the playback status of the stream corresponding to the current master is the synchronous status (Step S1723: NO), the flow proceeds to Step S1725.

The synchronization control unit 111 judges whether the following condition expression (Expression 16) is satisfied (Step S1725).


$$(\text{Expression 16})$$

$$PTS - STC < t4$$


Here, a threshold value t4 is a fixed value that can be determined for each system or data.

If the (Expression 16) is satisfied (Step S1725: YES), the flow proceeds to Step S1726.

The synchronization control unit 111 judges whether the following condition expression (Expression 17) is satisfied (Step S1726).

$$(\text{Expression 17})$$

$$PTS < STC$$

If the (Expression 17) is satisfied, that is, if the STC is greater than the PTS (Step S1726: YES), the PTS is later than the STC. Accordingly, the synchronization control unit 111 transmits a frame discard signal to the video decoding unit 104 (Step S1727). Then, the processing ends.

If the (Expression 17) is not satisfied, that is, if the PTS is greater than the STC (Step S1726: NO), the synchronization control unit 111 transmits a decoding suspension signal to the video decoding unit 104 (Step S1728). After a lapse of a time period corresponding to a difference between the PTS and the STC, the synchronization control unit 111 transmits a decoding permission signal to the video decoding unit 104 (Step S1729). Then, the processing ends.

If the (Expression 16) is not satisfied (Step S1725: NO), the synchronization control unit 111 clears the asynchronization counter to "0" (Step S1730). The synchronization control unit 111 transmits a decoding suspension signal to the video decoding unit 104 (Step S1731). After a lapse of a time period corresponding to t5, the synchronization control unit 111 transmits a decoding permission signal to the video decoding unit 104 (Step S1732).

In the fifth embodiment, if the STC is greater than the PTS in the (Expression 17), that is, the PTS is later than the STC, the synchronization control unit 111 instructs the video decoding unit 104 to discard data corresponding to one frame. However, the synchronization control unit 111 may instruct the video decoding unit 104 to discard data corresponding to a plurality of frames. Furthermore, instead of discarding data corresponding to a difference between the PTS and the STC, data corresponding to t5 may be discarded.

Moreover, in this forced synchronization processing, even if a difference between the PTS and the STC is no less than t4, a range in which synchronization control to be performed is data corresponding to t5. This is because of the following reason.

If the (Expression 14) "value of asynchronization counter < M" is not satisfied (Step S1714: NO), there is a case where a PTS error has occurred due to transmission error or a temporal discontinuity in an audio stream or a video stream repeatedly occurs for a short time period. In such a case, if the processing in Step S1728 is performed, a difference between a PTS and the STC might be an enormous value. This might cause waiting for a long time period, or discard of data corresponding to a long time period. In order to avoid such a situation, a range in which synchronization control to be performed is determined to be data corresponding to t5 even if even if a difference between the PTS and the STC is no less than t4.

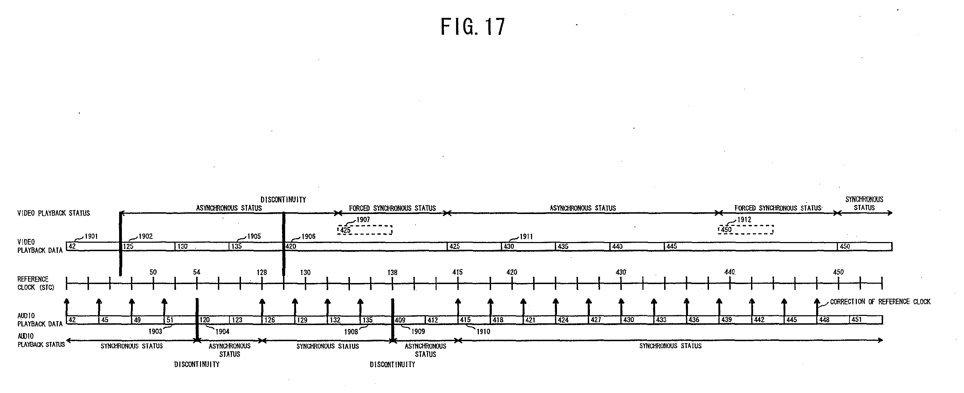

The operations shown in the flow chart of FIG. 16 are described in detail with reference to a timing chart shown in FIG. 17.

FIG. 17 is a timing chart showing a case where the fifth embodiment is applied to a video stream and an audio stream in which a temporal discontinuity repeatedly occurs.

In FIG. 17, video playback data and audio playback data are represented per frame. A number applied to each frame represents a PTS. For example, a PTS of a video frame 1901 is 42. FIG. 17 shows an operation in the audio master mode as an example. Accordingly, the reference clock is corrected based on a PTS of each,audio frame. A display period for video frames is 5, and a display period for audio frames is 3. Temporal gaps occur between the video frame 1901 and a video frame 1902, and between an audio frame 1903 and an audio frame 1904. Furthermore, temporal gaps occur between a video frame 1905 and a video frame 1906, and between an audio frame 1908 and an audio frame 1909.

The threshold value t3 in the (Expression 13) is 10 for video and audio. The threshold value M of the asynchronization counter in the (Expression 14) is 5 frames for video, and is 3 frames for audio. Also, the threshold value t4 in the (Expression 16) is 20 for audio and video. The fixed difference time period t5 in the (Expression 16) between the STC and the PTS is 10. During playback in which video and audio are in a synchronous status, a discontinuity occurs in the audio frame 1902. At this time, a difference between the video frame 1902 and the reference clock is 78, and is greater than 10 which is the threshold value t3 in the (Expression 13). Also, the value of the asynchronization counter is "0". Therefore, video asynchronization processing is performed.

Then, a discontinuity occurs in the audio frame 1904. Although the current master mode is the audio master mode, synchronization control processing is performed.

A difference between the audio frame 1904 and the reference clock is 66, and is greater than 10 which is the threshold value t3 in the (Expression 13). Also, the value of the asynchronization counter is "0". Therefore, audio asynchronization processing is performed.

While the audio asynchronization processing is performed, the reference clock is not corrected. Accordingly, the reference clock is in an asynchronous status.

Then, since the value of the asynchronization counter at an audio frame 1905 is "3", the (Expression 14) is not satisfied. Accordingly, forced synchronization processing is performed. Since the current master mode is the audio mater mode, the reference clock is corrected. As a result, the reference clock is 126.

Then, a discontinuity occurs again in the video frame 1906. The value of the asynchronization counter is "3", and therefore asynchronization processing is continued.

The value of the asynchronization counter at the video frame 1907 is "5", and the (Expression 14) is not satisfied. Accordingly, forced synchronization processing is performed. At this time, a PTS of the video frame 1907 is 425, and the STC is 133. A difference between the PTS and the STC is 292, and is greater than 20 which is the threshold value t4 in the (Expression 16). Accordingly, the waiting time period t5 is set to be 10, and decoding processing of the video frame 1907 is suspended, and a lapse of a time period corresponding to 10 time periods per frame is waited for. After the lapse of the time period corresponding to 10 time periods per frame, the video frame 1907 is decoded, and the decoded video frame 1907 is displayed. However, a difference between a PTS of a next video frame 1911 and the STC is 11, and is still greater than 10 which is the threshold value t3 in the (Expression 13) . The value of the asynchronization counter is "0". Asynchronization processing is performed, and the asynchronization counter restarts counting up.

Also, a discontinuity occurs in an audio frame 1909 again. A difference between a PTS of the audio frame 1909 and the STC is 371, and is greater than 10 which is the threshold value t3 in the (Expression 13). Accordingly, asynchronization processing is performed.

The value of the audio asynchronization counter at an audio frame 1910 is "3", and the (Expression 14) is not satisfied. Accordingly, asynchronization control processing is performed. Since the current master mode is the audio master mode, the reference clock is corrected. As a result, the reference clock is 409.

The video asynchronization counter at a video frame 1912 is "5", and the (Expression 14) is not satisfied. Accordingly, forced synchronization processing is performed. At this time, a PTS of a video frame 1912 is 450, and the STC is 439. A difference between the PTS and the STC is 11, and is greater than 10 which is the threshold value t3 in the (Expression 13). Accordingly, asynchronization processing is performed. That is, decoding processing of the video frame 1912 is suspended, and a lapse of a time period corresponding to 11 time periods per frame is waited for. After the lapse of the time period corresponding to 11 time periods per frame, the video frame 1912 is decoded, and the decoded video frame 1912 is displayed.

Then, the video is played back in synchronization with the reference clock.

As have been described above, with the structure of the synchronous playback device according to the fifth embodiment of the present invention, even if an error occurs in a stream due to transmission error, or a temporal discontinuity repeatedly occurs in either one or both of an audio stream and a video stream, or such an error and discontinuously occurs simultaneously, it is possible to perform playback without suspending playback at a point in which an error or discontinuity has occurred, and restore to playback of audio frames and video frames in synchronization with each other in a short time period.

Furthermore, forced synchronization processing is performed in a plurality of times. Accordingly, if it is necessary to perform forced synchronization processing for a long time period, it is possible to shorten a time period for which the same frame continues to be played out for a long time period, and reduce a user's uncomfortable feeling at viewing video while forced synchronization processing is performed.

(6. Sixth Embodiment)

The following describes a sixth embodiment of the present invention.

A synchronous playback device according to the sixth embodiment has the same structure and the same basic operations as those of the synchronous playback device according to the fifth embodiment. However, the sixth embodiment differs from the fifth embodiment in the following point. In the sixth embodiment, synchronization control processing performed during playback includes modified asynchronization processing. The following mainly describes the different operations between the fifth embodiment and the sixth embodiment.

(6-1. Operations)

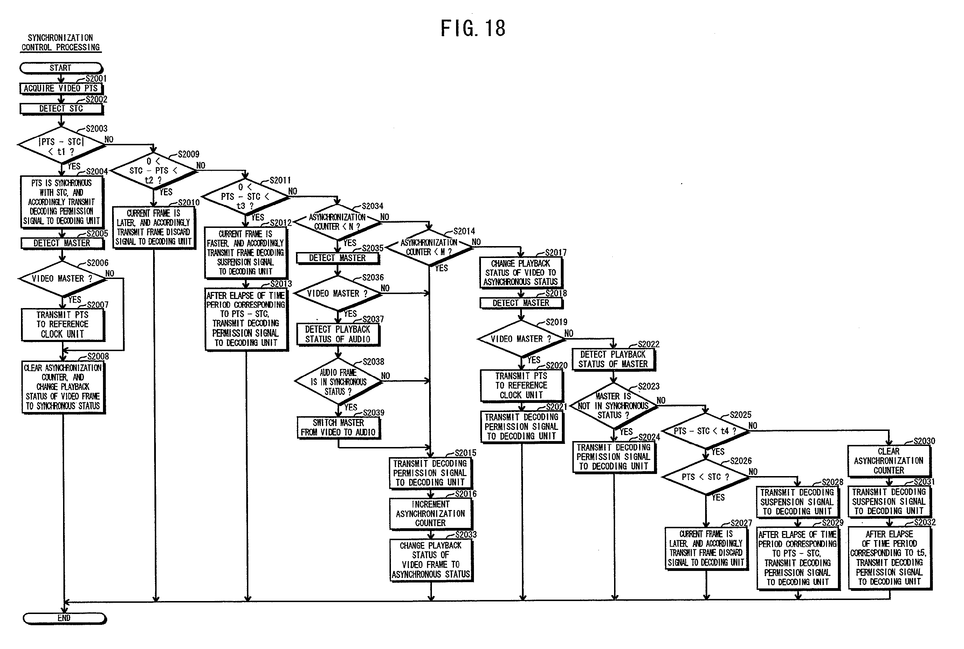

The operations of the synchronous playback device according to the sixth embodiment are described with reference to FIG. 18.

Although synchronization control of decoding processing of encoded video data is described here, it is of course possible to apply this synchronization control to decoding processing of encoded audio data. In such a case, portions represented as "video" and portions represented as "audio" in FIG. 18 are replaced with each other.

FIG. 18 is a flow chart showing the synchronous playback device according to the sixth embodiment.

The descriptions of the operations in Steps S2001 to S2033 are omitted because of being the same as those of Steps S1701 to S1733 shown in FIG. 16 according to the fifth embodiment.

The following describes asynchronization processing from Step S2034 to S2039 in detail with reference to FIG. 18.

The synchronization control unit 111 judges whether the following condition expression (Expression 18) is satisfied (Step S2034).

(Expression 18)

value of asynchronization counter > N

Here, a threshold value N is a fixed value that can be determined for each system or data, and is less than the M threshold value in the (Expression 14).

If the (Expression 18) is not satisfied (Step S2034: NO), the flow proceeds to Step S2014. Then, the synchronization control unit 111 performs processing similar to those in the fifth embodiment.

If the (Expression 18) is satisfied (Step S2034: YES), the flow proceeds to Step 2035.

The synchronization control unit 111 detects the current master mode (Step S2035).

If the current master mode is the video master mode (Step S2036: YES), the flow proceeds to Step S2037. If the current master mode is not the video master mode (Step S2036: NO), the flow proceeds to Step S2015.

The synchronization control unit 111 detects the audio playback status (Step S2037).

If the audio playback status is not the synchronous status (Step S2038: NO), the flow proceeds to Step S2015. If the audio playback status is the synchronous status (Step S2038: YES), the flow proceeds to Step S2039.

The synchronization control unit 111 switches the current master mode from the video master mode to the audio master mode (Step S2039).

If the value of asynchronization counter is no less than the threshold value N, the master mode switching control is performed for the following reason.

Suppose that a discontinuity has occurred in a master stream (in an audio stream, for example) included in a recorded stream, and a discontinuity has not occurred in the other stream included in the recorded stream. In such case, if forced synchronization processing is performed after the occurrence of the discontinuity in the master stream, the reference clock needs to be corrected. In other words, this processing causes occurrence of a discontinuity in the reference clock.

As a result, the playback device operates such that a stream that is not a master stream (a video stream in a case where the master stream is the audio stream) is synchronous with the reference clock. Accordingly, although no discontinuity has occurred in the stream, continuous playback is not performed due to frame discard or waiting caused by the synchronization control processing. In this way, if a discontinuity has occurred in one stream, especially if a discontinuity has occurred in a stream designated as one master stream, the master mode switching control is performed so as to smoothly play back the other stream in which no discontinuity has occurred.

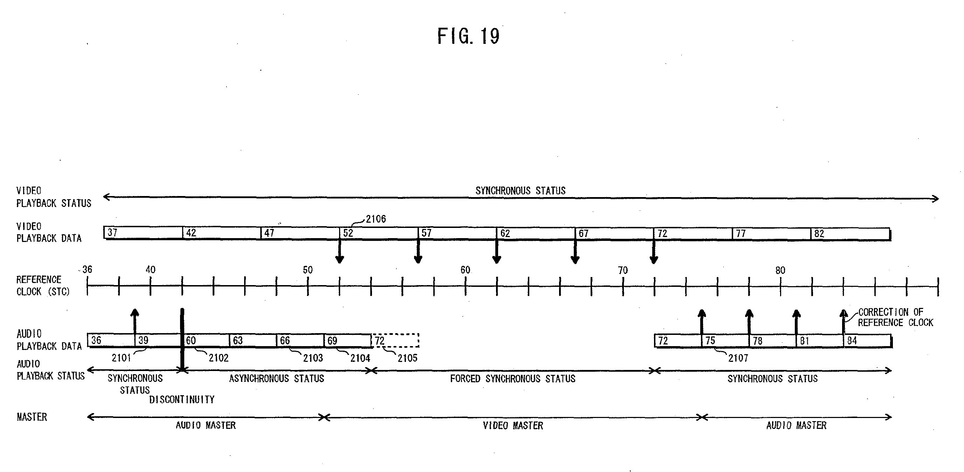

The operations shown in the flow chart of FIG. 18 are described in detail with reference to a timing chart shown in FIG. 19.

FIG. 19 is a timing chart showing a case where the sixth embodiment is applied to a case where a temporal discontinuity has occurred in an audio stream, and the playback device operates in the audio master mode during synchronous playback.

In FIG. 19, video playback data and audio playback data are represented per frame. A number applied to each frame represents a PTS. For example, a PTS of an audio frame 2101 is 39. FIG. 19 shows an operation in the audio master mode as an example. Accordingly, the reference clock is corrected based on a PTS of each audio frame. A display period for video frames is 5, and a display period for audio frames is 3. A temporal gap occurs between an audio frame 2101 and an audio frame 2102. No temporal gap occurs between video frames.

The threshold value t3 in the (Expression 13) is 10 for video and audio. The threshold value M of the asynchronization counter in the (Expression 14) is 4 frames for audio. Also, the threshold value N of the master switching in the (Expression 18) is 2 frames for audio.

During playback in which video and audio are in a synchronous status and the current master mode is the audio master mode, a discontinuity occurs in the audio frame 2102. At this time, a difference between the audio frame 2102 and the reference clock is 18. Also, the value of the asynchronization counter is "0". Accordingly, the difference is greater than 10 which is the threshold value t3 in the (Expression 13), and asynchronization processing is performed.

Then, the value of the asynchronization counter in an audio frame 2103 is 3, and the (Expression 18) is satisfied.

Accordingly, master switching control is performed to switch the current master from the audio master to the video master. Since a video frame 2106 is synchronous with the reference clock, the video frame 2106 is output in the synchronous status, and the reference clock is corrected.

On the other hand, a difference between an audio frame 2104 and the reference clock is 18, and accordingly the asynchronization processing continues to be performed. Then, the (Expression 14) is not satisfied in an audio frame 2105. Accordingly, forced synchronization processing is performed.

A difference between the audio frame 2105 and the reference clock is 18. Accordingly, decoding processing of the audio frame 2105 is suspended, and a lapse of a time period corresponding to 18 time periods per frame is waited for. While waiting for the lapse of time period corresponding to 18 time periods per frame, no audio is output. After the lapse of the time period corresponding to 18 time periods per frame, the audio frame 2105 is decoded, and the decoded audio frame 2105 is output. The audio is in synchronous status in audio frame 2107 again. Accordingly, master switching control is performed so as to switch the master from the video master to the audio master to restore the normal status. At this time, video frames are played back continuously with no lost frame.

As have been described above, with the structure of the synchronous playback device according to the sixth embodiment, if a discontinuity has occurred in either one of an audio stream and a video stream included in a multiplexed stream recorded under a bad radio wave condition, especially if a discontinuity has occurred in one stream that is a master stream, it is possible to perform continuous playback of the other stream that is a not master stream and in which no discontinuity has occurred.

(7. Seventh Embodiment)

A seventh embodiment describes a portable telephone according to the present invention. A portable telephone 2000 according to the seventh embodiment includes the synchronous playback device 100 according to the first embodiment.

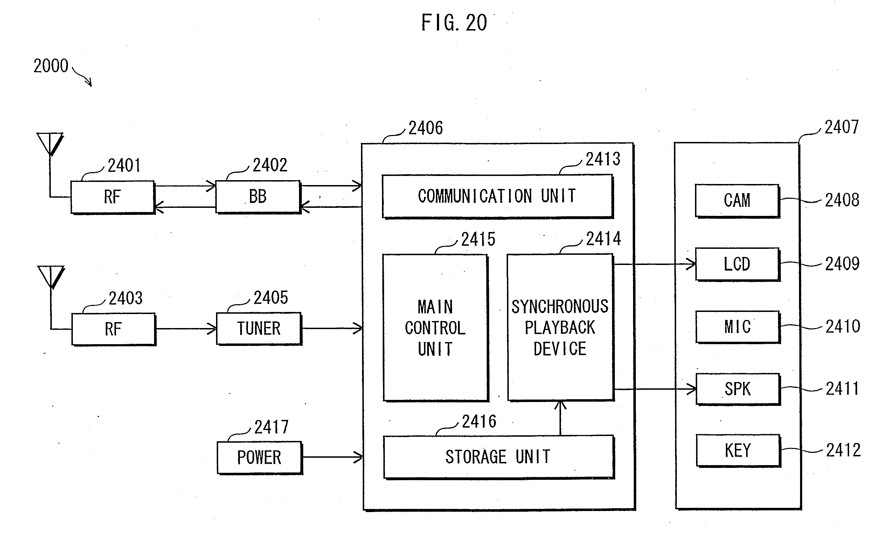

FIG. 20 is a block diagram showing the structure of the portable telephone 2000 according to the present invention. The portable telephone 2000 includes a communication wireless unit 2401 for mobile communications, a baseband unit 2402, a television wireless unit 2403 for receiving digital television broadcasts, a television tuner 2405, an application processing unit 2406 for performing various controls, an input/output unit 2407, and a power source unit 2417.

The communication wireless unit 2401 and the baseband unit 2402 perform signal processing for wireless telephone communications.

The television wireless unit 2403 receives digital television broadcast waves.

The television tuner 2405 performs signal processing on digital television broadcast waves received by the television wireless unit 2403.

The application processing unit 2406 includes a communication unit 2413, a synchronous playback device 2414, a main control unit 2415, and a storage unit 2416.

The communication unit 2413 is an interface for performing communications between the application processing unit 2406 and external devices.

The synchronous playback device 2414 has the same functions of the synchronous playback device 100 according to the first embodiment.

The main control unit 2415 is a CPU (Central Processing Unit) for controlling each of the units included in the portable telephone 2000.

The storage unit 2416 is a memory for storing data, and specifically storing digital television broadcast data that has been received by the television wireless unit 2403 and on which signal processing has been performed by the television tuner 2405.

The input/output unit 2407 includes a camera 2408, an LCD (Liquid Crystal Display) 2409, a microphone 2410, a speaker 2411, and a key input unit 2412.

The camera 2408 inputs photographed data.

The LCD 2409 outputs images and videos, and specifically outputs videos to be played back by the synchronous playback device 2414.

The microphone 2410 inputs sounds such as a user's voice for wireless telephone communications.

The speaker 2411 outputs sounds such as sounds to be played back by the synchronous playback device 2414 and a communication partner's voice for wireless telephone communication.

The key input unit 2412 receives a user's input operation.

The following briefly describes the operations of the portable telephone 2000.

The operations for viewing, recording, and playing back digital television broadcasts performed by the synchronous playback device according to the present invention are described with reference to FIG. 20.

For viewing digital television broadcasts, the television wireless unit 2403 receives a channel selected by the television tuner 2405, and transmits a multiplexed stream (MPEG2-TS stream) to the application processing unit 2406. The application processing unit 2406 transmits the received multiplexed stream to the synchronous playback device 2414. The received multiplexed stream is transmitted to the transmission unit 101 included in the synchronous playback device 2414 shown in FIG. 1, and is separated into audio data and video data. The separated audio data and video data are decoded so as to be played back.

Also, for recording digital television broadcasts, the storage unit 2416 stores therein a multiplexed stream transmitted from the television tuner 2405. Here, the storage unit 2416 may be a memory included in the portable telephone 2400 or a removable memory from the portable telephone 2000.

Furthermore, for playing back the stored multiplexed stream, in accordance with a user's key operation input via the key input unit 2412, the storage unit 2416 transmits the multiplexed stream to the synchronous playback device 2414. In the synchronous playback device 2414, the multiplexed stream is separated into audio data and video data. The separated audio data and video data are decoded so as to be played back.

Note that an example in which the portable telephone 2000 includes the synchronous playback device 100 according to the first embodiment is described here. Instead of this, the portable telephone 2000 may of course include any of the synchronous playback devices according to the second to the sixth embodiments.

Furthermore, an example in which the synchronous playback device of the present invention is applied to a portable telephone is described here. Instead of this, the synchronous playback device is applicable to audio devices and various types of video play back devices.

INDUSTRIAL APPLICABILITY

The synchronous playback device of the present invention is broadly applicable to playback devices for playing back encoded videos. The synchronous playback device is useful in that it is possible to start playback from the most appropriate frame included in a stream in which a frame has been lost due to recording of the stream under a bad radio wave condition, and continue the playback without interruption of video signals and audio signals.

**Claims**

1. A playback device for playing back a data stream that contains frames respectively having frame playback times that are provided with predetermined time intervals, the playback device comprising:

   an acquisition unit operable to sequentially acquire the frame playback times of the frames;
   a storage unit operable to store therein the frame playback times acquired by the acquisition unit;
   a judgment unit operable to judge whether a current frame playback time that has been most recently acquired by the acquisition unit is included in a playback start period including a designated playback start time, and if judging negatively, further judge whether a difference between the current frame playback time and a previous frame playback time that is immediately previous to the current frame playback time is greater than the predetermined time interval; and
   a playback unit operable, (a) if the judgment unit judges that the current frame playback time is included in the playback start period, to start playback from a frame having the current frame playback time, and (b) if the judgment unit judges that the current frame playback time is not included in the playback start period and further judges that the difference is greater than the predetermined time interval, to start playback from a frame having the current frame playback time.

2. The playback device of Claim 1, wherein
   the data stream contains program reference times that increase by each predetermined period,
   the playback device further comprises
   a detection unit operable to (a) sequentially acquire program reference times, (b) judge whether a difference between a current program reference time that has been most recently acquired and a previous program reference time that is immediately previous to the current program reference time is greater than a predetermined threshold value, and (c) if judging affirmatively, detect that a discontinuity has occurred between the current program reference time and the previous program reference time, and store therein the current program reference time,
   if the difference between the current frame playback time and the previous frame playback time is greater than the predetermined time interval and the detection unit stores therein the current program reference time, the judgment unit further judges whether a difference between the current program reference time and the current frame playback time is greater than the predetermined period, and
   if the difference between the current program reference time and the current frame playback time is no more than the predetermined period, the playback unit does not start playback from the frame having the current frame playback time.

3. The playback device of Claim 2 complying with an MPEG (Moving Picture Experts Group) standard, wherein each of the frame playback times is a PTS (Presentation Time Stamp) defined by the MPEG standard, and each of the program reference times is a PCR (Program Clock Reference) defined by the MPEG standard.

4. A playback device for decoding and playing back a data stream that contains video frames and audio frames respectively having video playback times and audio playback times that are provided with predetermined time intervals, the playback device comprising:

   an acquisition unit operable to sequentially acquire video frame playback times of the video frames and audio frame playback times of the audio frames;
   a judgment unit operable to judge whether a video frame playback time and an audio frame playback time acquired by the acquisition unit are respectively included in a playback start period including a designated playback start time; and
   a decoding unit operable, if the judgment unit judges affirmatively, to decode a video frame and an audio frame respectively having the video frame and the audio frame included in the playback start period, and start playback from the decoded video frame and the decoded audio frame, wherein
   maximum time limits Tv and Ta are set, Tv being required for judging whether a video frame playback time acquired by the acquisition unit is included in the playback start period, and Ta being required for judging whether the audio frame playback time acquires by the acquisition unit is included in the playback start period, and

      (i) when Tv is greater than Ta, if the acquired audio frame playback time is not included in the playback start period and the video frames have been decoded after a lapse of Ta, the decoding unit plays back the video frames, and
      (ii) when Ta is greater than Tv, if the acquired video frame playback time is not included in the playback start period and the audio frames have been decoded after a lapse of Tv, the decoding unit plays back the audio frames.

5. A playback device for playing back a data stream that contains frames respectively having frame playback times provided with predetermined time intervals, in synchronization with a system time clock included therein, the playback device comprising:

   a judgment unit operable to sequentially judge whether frame playback times of the frames match the system time clock;
   a playback unit operable, if the judgment unit judges affirmatively, to play back a frame having a frame playback time that matches the system time clock;
   a control unit operable, if the judgment unit judges negatively, to instruct the playback unit to play back, in asynchronization with the system time clock, a frame having a frame playback time that does not match the system time clock; and
   a count unit operable, in accordance with an instruction issued by the control unit, to count the number of frames that have been played back by the playback unit in asynchronization with the system time clock, wherein
   if the judgment unit judges negatively and the count unit counts a predetermined number of frames that have been played back in asynchronization with the system time clock, the control unit instructs the playback unit to forcibly play back, in synchronization with the system time clock, a frame having a frame playback time that does not match the system time clock.

6. The playback device of Claim 5, wherein

      (i) if the judgment unit judges that a frame playback time is greater than the system time clock and the count unit counts the predetermined number of frames that have been played back in asynchronization with the system time clock, the control unit instructs the playback unit to wait until the frame playback time matches the system time clock and play back a frame having the frame playback time, and
      (ii) if the judgment unit judges that a frame playback time is less than the system time clock and the count unit counts the predetermined number of frames that have been played back in asynchronization with the system time clock, the control unit instructs the playback unit not to play back a frame having the frame playback time.

**7.** The playback device of Claim 6, wherein
if the judgment unit judges that a frame playback time is greater than the system time clock and the count unit counts the predetermined number of frames that have been played back in asynchronization with the system time clock, and further if a difference between the frame playback time and the system time clock is greater than a predetermined difference t1, the control unit instructs the playback unit to wait for a predetermined period t2 that is less than the predetermined difference t1, and play back a frame having the frame playback time.

**8.** The playback device of Claim 5, wherein
the frames includes first media frames relating to first media and second media frames relating to second media,
the system time clock is set based on each of first media frame playback times of the first media frames,
the judgment unit separately judges whether each of the first media frame playback times matches the system time clock, and whether each of second media frame playback times of the second media frames matches the system time clock,
the count unit separately counts the number of first media frames that have been played back in asynchronization with the system time clock and the number of second media frames that have been played back in asynchronization with the system time clock, and
if the judgment unit judges that a first media frame playback does not match the system time clock and the count unit counts the predetermined number of first media frames that have been played back in asynchronization with the system time clock, the control unit determines to set the system time clock based on each of the second media frame playback times.

**9.** A portable telephone comprising the playback device according to any one of Claims 1 to 8.

**10.** A playback method used in a playback device for playing back a data stream that contains frames respectively having frame playback times that are provided with predetermined time intervals, the playback method comprising:

an acquisition step for sequentially acquire the frame playback times of the frames;
a storage step for storing therein the frame playback times acquired by the acquisition unit;
a judgment step for judging whether a current frame playback time that has been most recently acquired by the acquisition unit is included in a playback start period including a designated playback start time, and if a result of the judgment step is negative, for further judging whether a difference between the current frame playback time and a previous frame playback time that is immediately previous to the current frame playback time is greater than the predetermined time interval; and
a playback step for, (a) if the judgment step judges that the current frame playback time is included in the playback start period, starting playback from a frame having the current frame playback time, and (b) if the judgment step judges that the current frame playback time is not included in the playback start period and further judges that the difference is greater than the predetermined time interval, starting playback from a frame having the current frame playback time.

**11.** A playback method used in a playback device for playing back a data stream that contains frames respectively having frame playback times provided with predetermined time intervals, in synchronization with a system time clock included therein, the playback method comprising:

a judgment step for judging sequentially judge whether frame playback times of the frames match the system time clock;
a first playback step for, if the judgment step judges affirmatively, playing back a frame having a frame playback time that matches the system time clock;
a second playback step for, if the judgment step judges negatively, playing back, in asynchronization with the system time clock, a frame having a frame playback time that does not match the system time clock;
a count step for counting the number of frames that have been played back in the playback step in asynchronization with the system time clock; and
a forced synchronization processing step for, if the judgment step judges negatively and the count step counts the predetermined number of frames that have been played back in asynchronization with the system time clock, performing forced synchronization processing for forcibly playing back, in synchronization with the system time clock, a frame having a frame playback time that does not match the system time clock.

FIG. 1

EP 1 995 960 A1

100

| AUDIO PTS JUDGMENT UNIT | 110 |

| AUDIO PTS STORAGE UNIT | 109 |

| REFERENCE CLOCK UNIT | 112 |

AUDIO PTS | AUDIO PTS ACQUISITION UNIT | 108

DETECT STC

CORRECT CLOCK

| TRANSMISSION UNIT | 101 |

| DEMULTIPLEXING UNIT | 102 |

| AUDIO DECODING UNIT | 103 |

AUDIO PLAYBACK DATA

MULTIPLEXED STREAM

ENCODED AUDIO DATA

ENCODED VIDEO DATA

| SYNCHRONIZATION CONTROL UNIT | 111 |

| VIDEO DECODING UNIT | 104 |

VIDEO PLAYBACK DATA

VIDEO PTS | VIDEO PTS ACQUISITION UNIT | 105

| VIDEO PTS STORAGE UNIT | 106 |

| VIDEO PTS JUDGMENT UNIT | 107 |

FIG. 2

EP 1 995 960 A1

501

← 188 BYTES →

| TS PACKET | TS PACKET | TS PACKET | TS PACKET | TS PACKET | TS PACKET |
|-----------|-----------|-----------|-----------|-----------|-----------|

502

| TS HEADER | PAYLOAD |
|-----------|---------|

503                                    504

| SYNC WORD | | PID | | ADAPTATION FIELD CONTROL | | ADAPTATION FIELD |
|-----------|-|-----|-|--------------------------|-|------------------|

505              506        507              508

FIG. 3

188 BYTES

TS PACKET (PID = k) 601
TS PACKET (PID = m)
TS PACKET (PID = k)
TS PACKET (PID = k) 602
TS PACKET (PID = m)
TS PACKET (PID = h)

TS HEADER | PAYLOAD
TS HEADER | PAYLOAD
TS HEADER | PAYLOAD

PES PACKET

(VARIABLE LENGTH)

FIG. 4

EP 1 995 960 A1

FIG. 5

VIDEO FRAME SEARCH PROCESSING

```
                    ( START )
                        │
                        ▼                    S201
          ┌─────────────────────────────┐
          │   REQUEST TRANSMISSION UNIT  │
          │       TO SUPPLY STREAM       │
          └─────────────────────────────┘
                        │
                        ▼                    S202
          ┌─────────────────────────────┐
          │   DETECT FIRST PES PACKET    │
          └─────────────────────────────┘
                        │
                        ▼                    S203
          ┌─────────────────────────────┐
          │  EXTRACT ENCODED DATA AND PTS│
          └─────────────────────────────┘
                        │
                        ▼          S204                          S209
          ┌─────────────────────┐        ┌─────────────────────┐
          │   STORE PTS OF FRAME │        │   JUDGE VIDEO FRAME  │
          │    AS CURRENT PTS    │        │   AS FAIL-SAFE DATA  │
          └─────────────────────┘        └─────────────────────┘
                        │
                        ▼          S205
                  ╱ CURRENT ╲       NO
                 ╱ PTS MATCHES ENTRY ╲───────────┐
                 ╲    POINT ?    ╱                │
                  ╲           ╱                   │
                        │ YES                     ▼              S208
                        │                  ╱ CURRENT PTS - ╲
                        │ S206            ╱ PREVIOUS PTS < 0 ╲      YES
                        ▼             ╱ OR CURRENT PTS -   ╲─────┐
          ┌─────────────────────────┐  ╲  PREVIOUS PTS >  ╱       │
          │ DECODING PROCESSING OF   │   ╲THRESHOLD VALUE ?╱      │
          │         FRAME           │        ╲       ╱           │
          └─────────────────────────┘           │ NO             │
                        │ S207                   ▼        S210    │
                        ▼                 ┌─────────────────────┐ │
          ┌─────────────────────────┐     │ SKIP PROCESSING OF  │ │
          │ PREPARATION FOR OUTPUTTING│    │       FRAME         │ │
          │ VIDEO FRAME IS COMPLETE  │     └─────────────────────┘ │
          └─────────────────────────┘            │ S211           │
                        │                         ▼                │
                        ▼                 ┌─────────────────────────┐
                   ( END )                │ STORE CURRENT PTS AS     │
                                          │     PREVIOUS PTS         │
                                          └─────────────────────────┘
```

# FIG. 6

AUDIO FRAME SEARCH PROCESSING

START

REQUEST TRANSMISSION UNIT
TO SUPPLY STREAM        S301

DETECT FIRST PES PACKET    S302

EXTRACT ENCODED DATA AND PTS    S303

STORE PTS OF FRAME
AS CURRENT PTS    S304

JUDGE AUDIO FRAME
AS FAIL-SAFE DATA    S309

CURRENT
PTS MATCHES ENTRY
POINT ?    S305    NO

YES

DECODING PROCESSING OF FRAME    S306

CURRENT PTS –
PREVIOUS PTS < 0
OR CURRENT PTS –
PREVIOUS PTS >
THRESHOLD VALUE ?    S308    YES

NO

PREPARATION FOR OUTPUTTING
AUDIO FRAME IS COMPLETE    S307

SKIP PROCESSING OF FRAME    S310

END

STORE CURRENT PTS AS PREVIOUS PTS    S311

FIG. 7

OUTPUT PROCESSING

START

S401
PREPARATION FOR OUTPUTTING BOTH VIDEO FRAME AND AUDIO FRAME IS COMPLETE ? — NO

YES

S402
VIDEO FRAME AND AUDIO FRAME ARE FAIL-SAFE DATA ? — YES

NO

S403
ONLY AUDIO FRAME IS FAIL-SAFE DATA ? — YES

NO

S404
ONLY VIDEO FRAME IS FAIL-SAFE DATA ? — YES

NO

S405
AUDIO PTS ≦ VIDEO PTS ? — NO

YES

S406
OUTPUT AUDIO DATA, AND CORRECT REFERENCE CLOCK BASED ON AUDIO PTS

S407
SYNCHRONIZATION CONTROL USING VIDEO PTS

S408
OUTPUT VIDEO DATA, AND CORRECT REFERENCE CLOCK BASED ON VIDEO PTS

S409
SYNCHRONIZATION CONTROL USING AUDIO PTS

END

EP 1 995 960 A1

37

FIG. 8

800

- TRANSMISSION UNIT — 801
- MULTIPLEXED STREAM
- DEMULTIPLEXING UNIT — 802
- ENCODED AUDIO DATA
- ENCODED VIDEO DATA

- AUDIO PTS JUDGMENT UNIT — 810
- AUDIO PTS STORAGE UNIT — 809
- AUDIO PTS ACQUISITION UNIT — 808
- AUDIO PTS
- AUDIO DECODING UNIT — 803
- REFERENCE CLOCK UNIT — 812
- AUDIO TIME MANAGEMENT UNIT — 813
- DETECT STC
- CORRECT CLOCK
- AUDIO PLAYBACK DATA
- SYNCHRONIZATION CONTROL UNIT — 811
- VIDEO DECODING UNIT — 804
- VIDEO PLAYBACK DATA
- VIDEO PTS ACQUISITION UNIT — 805
- VIDEO PTS
- VIDEO PTS STORAGE UNIT — 806
- VIDEO PTS JUDGMENT UNIT — 807
- VIDEO TIME MANAGEMENT UNIT — 814

EP 1 995 960 A1

FIG. 9

```
                    ┌──────────────┐
                    │    START     │
                    └──────┬───────┘
                           │
                           ▼        ⟋S901
                      ╱─────────╲
                     ╱  RECEIVE   ╲      NO
                    ╱  AUDIO       ╲─────────────────────────┐
                    ╲  TIME-OUT    ╱                          │
                     ╲  SIGNAL ?  ╱                           │
                      ╲─────────╱                             ▼        ⟋S904
                           │ YES                         ╱─────────╲
                           │                       NO   ╱  RECEIVE   ╲
                           │                      ┌─────╲  VIDEO       ╱
                           │                      │      ╲  TIME-OUT   ╱
                           │                      │       ╲  SIGNAL ? ╱
                           ▼        ⟋S902          │        ╲───────╱
                      ╱─────────╲                  │           │ YES
            NO       ╱ PREPARATION ╲               │           │
         ┌──────────╱ FOR OUTPUTTING ╲             │           ▼        ⟋S905
         │          ╲ VIDEO FRAME     ╱       NO   │      ╱─────────╲
         │           ╲ IS COMPLETE ? ╱       ┌─────╱ PREPARATION FOR ╲
         │            ╲───────────╱          │     ╲ OUTPUTTING AUDIO ╱
         │                 │ YES             │      ╲ FRAME IS        ╱
         │                 │    ⟋S903        │       ╲ COMPLETE ?    ╱
         │                 ▼                 │        ╲───────────╱
         │          ┌─────────────┐          │             │ YES  ⟋S906
         │          │ OUTPUT VIDEO │         │             ▼
         │          │ DATA, AND    │         │      ┌─────────────┐
         │          │ CORRECT      │         │      │ OUTPUT AUDIO │
         │          │ REFERENCE    │         │      │ DATA, AND    │
         │          │ CLOCK BASED  │         │      │ CORRECT      │
         │          │ ON VIDEO PTS │         │      │ REFERENCE    │
         │          └──────┬──────┘          │      │ CLOCK BASED  │
         │                 │                 │      │ ON AUDIO PTS │
         └─────────────────┤                 │      └──────┬──────┘
                           │                 │             │
                           ▼                 │             │
                    ┌──────────────┐         └─────────────┘
                    │     END      │
                    └──────────────┘
```

FIG. 10

EP 1 995 960 A1

EP 1 995 960 A1

FIG. 11

188 BYTES

501

| TS PACKET | TS PACKET | TS PACKET | TS PACKET | TS PACKET | TS PACKET |

502

| TS HEADER | PAYLOAD |

503    504

| SYNC WORD | | PID | | ADAPTATION FIELD CONTROL | | ADAPTATION FIELD |

505    506    507    508

| OPTIONAL FIELD | |

509

| PCR | |

510

FIG. 12          VIDEO FRAME SEARCH PROCESSING

```
                    ┌──────────────┐
                    │    START     │
                    └──────────────┘
                           │
                           ▼           S1101
              ┌────────────────────────────┐
              │  REQUEST TRANSMISSION UNIT  │
              │      TO SUPPLY STREAM       │
              └────────────────────────────┘
                           │
                           ▼        S1102
                      CURRENT PCR -
                  PREVIOUS PCR < 0 OR          NO
                 CURRENT PCR - PREVIOUS PCR
                    > THRESHOLD VALUE ?
                           │
          S1103            │ YES
              ┌────────────────────────────┐
              │  DETECT DISCONTINUITY POINT │
              │  BETWEEN TS PACKETS, AND STORE │
              │  PCR AT DISCONTINUITY POINT │
              └────────────────────────────┘
          S1104            │
              ┌────────────────────────────┐
              │   DETECT FIRST PES PACKET   │
              └────────────────────────────┘
          S1105            │
              ┌────────────────────────────┐               ┌──────────────────────┐
              │ EXTRACT ENCODED DATA AND PTS│               │  JUDGE VIDEO FRAME    │  S1112
              └────────────────────────────┘               │  AS FAIL-SAFE DATA    │
                           │        S1106                   └──────────────────────┘
              ┌────────────────────────────┐
              │ STORE PTS OF FRAME AS CURRENT PTS │
              └────────────────────────────┘
                           │      S1107
                       CURRENT              NO
                   PTS MATCHES ENTRY ─────────────────
                       POINT ?
                           │ YES                          CURRENT PTS -        S1110
                           │                          PREVIOUS PTS < 0          YES
                           │                          OR CURRENT PTS -
                           │        S1108             PREVIOUS PTS >                S1111
              ┌────────────────────────────┐         THRESHOLD VALUE ?        - THRESHOLD
              │  DECODING PROCESSING OF FRAME │          │                     VALUE < PCR
              └────────────────────────────┘           NO        YES          - CURRENT PTS
                           │        S1109                                      < THRESHOLD
              ┌────────────────────────────┐                                      VALUE ?
              │ PREPARATION FOR OUTPUTTING  │                                       NO
              │  VIDEO FRAME IS COMPLETE    │
              └────────────────────────────┘
                           │
                    ┌──────────────┐
                    │     END      │             ┌────────────────────────┐
                    └──────────────┘             │ SKIP PROCESSING OF FRAME │  S1113
                                                 └────────────────────────┘
                                                              │        S1114
                                                 ┌───────────────────────────────┐
                                                 │ STORE CURRENT PTS AS PREVIOUS PTS │
                                                 └───────────────────────────────┘
```

FIG. 13          AUDIO FRAME SEARCH PROCESSING

```
                    ┌──────────────┐
                    │    START     │
                    └──────┬───────┘
                           │        ┌S1201
              ┌────────────┴────────────┐
              │  REQUEST TRANSMISSION UNIT │
              │      TO SUPPLY STREAM      │
              └────────────┬────────────┘
                           │        ┌S1202
                        ╱─────╲
                      ╱ CURRENT PCR ─ ╲
                    ╱  PREVIOUS PCR < 0 OR ╲   NO
                    ╲ CURRENT PCR - PREVIOUS PCR ╱───────┐
                      ╲ >THRESHOLD VALUE ? ╱              │
                        ╲─────╱                           │
      S1203              │ YES                            │
         ┌───────────────┴───────────────┐               │
         │    DETECT DISCONTINUITY POINT  │               │
         │ BETWEEN TS PACKETS, AND STORE  │               │
         │  PCR AT DISCONTINUITY POINT    │               │
         └───────────────┬───────────────┘               │
      S1204              │◄──────────────────────────────┘
         ┌───────────────┴───────────────┐
         │    DETECT FIRST PES PACKET     │
         └───────────────┬───────────────┘
      S1205              │◄─────────────────────────────────────────┐
         ┌───────────────┴───────────────┐                          │
         │  EXTRACT ENCODED DATA AND PTS  │                          │
         └───────────────┬───────────────┘                          │
                         │        ┌S1206          ┌S1212             │
         ┌───────────────┴───────────┐   ┌─────────┴──────────┐      │
         │ STORE PTS OF FRAME AS CURRENT PTS│ │ JUDGE AUDIO FRAME │   │
         └───────────────┬───────────┘   │ AS FAIL-SAFE DATA  │      │
                         │        ┌S1207  └─────────┬──────────┘      │
                      ╱─────╲                       │                 │
                    ╱ CURRENT ╲     NO              │                 │
                   ╱ PTS MATCHES ENTRY ╲────────────┤                 │
                    ╲   POINT ?  ╱                  │                 │
                      ╲─────╱                  ╱────┴────╲            │
                         │ YES            ╱ CURRENT PTS ─ ╲  S1210    │
                         │              ╱ PREVIOUS PTS < 0 ╲  YES     │
                         │◄─────────────╲ OR CURRENT PTS - ╱────┐     │
                         │        ┌S1208 ╲ PREVIOUS PTS > ╱     │ S1211│
         ┌───────────────┴───────┐      ╲THRESHOLD VALUE ?╱  ╱───┴───╲ │
         │  DECODING PROCESSING OF FRAME│  ╲────╱        ╱ - THRESHOLD ╲│
         └───────────────┬───────┘     NO │      ╱ VALUE < PCR ╲       │
                         │        ┌S1209    │ YES ╲ - CURRENT PTS ╱     │
         ┌───────────────┴───────┐         │◄────╲ < THRESHOLD ╱        │
         │ PREPARATION FOR OUTPUTTING │    │      ╲ VALUE ? ╱           │
         │   AUDIO FRAME IS COMPLETE  │    │        ╲──╱                │
         └───────────────┬───────┘         │         │ NO              │
                         │                 │         └─────────────────┤
                    ┌────┴────┐            │        ┌S1213             │
                    │   END   │   ┌────────┴────────┐                  │
                    └─────────┘   │ SKIP PROCESSING OF FRAME │         │
                                  └────────┬────────┘                  │
                                           │        ┌S1214             │
                                  ┌────────┴──────────────────┐        │
                                  │ STORE CURRENT PTS AS PREVIOUS PTS │ │
                                  └────────┬──────────────────┘        │
                                           └───────────────────────────┘
```

# FIG. 14

SYNCHRONIZATION
CONTROL PROCESSING

START

S1601 ACQUIRE VIDEO PTS

S1602 DETECT STC

S1603 |PTS - STC| < t1 ?
— NO → S1609
— YES → S1604

S1604 PTS IS SYNCHRONOUS WITH STC, AND ACCORDINGLY TRANSMIT DECODING PERMISSION SIGNAL TO DECODING UNIT

S1605 DETECT MASTER

S1606 VIDEO MASTER ?
— NO
— YES → S1607

S1607 TRANSMIT PTS TO REFERENCE CLOCK UNIT

S1608 CLEAR ASYNCHRONIZATION COUNTER, AND CHANGE PLAYBACK STATUS OF VIDEO FRAME TO SYNCHRONOUS STATUS

S1609 0 < STC - PTS < t2 ?
— NO → S1611
— YES → S1610

S1610 CURRENT FRAME IS LATER, AND ACCORDINGLY TRANSMIT FRAME DISCARD SIGNAL TO DECODING UNIT

S1611 0 < PTS - STC < t3 ?
— NO → S1614
— YES → S1612

S1612 CURRENT FRAME IS FASTER, AND ACCORDINGLY TRANSMIT FRAME DECODING SUSPENSION SIGNAL TO DECODING UNIT

S1613 AFTER ELAPSE OF TIME PERIOD CORRESPONDING TO PTS - STC, TRANSMIT DECODING PERMISSION SIGNAL TO DECODING UNIT

S1614 ASYNCHRONIZATION COUNTER < M ?
— NO → S1617
— YES → S1615

S1615 TRANSMIT DECODING PERMISSION SIGNAL TO DECODING UNIT

S1616 INCREMENT ASYNCHRONIZATION COUNTER

S1629 CHANGE PLAYBACK STATUS OF VIDEO TO ASYNCHRONOUS STATUS

S1617 CHANGE PLAYBACK STATUS OF VIDEO TO FORCED SYNCHRONOUS STATUS

S1618 DETECT MASTER

S1619 VIDEO MASTER ?
— NO → S1622
— YES → S1620

S1620 TRANSMIT PTS TO REFERENCE CLOCK UNIT

S1621 TRANSMIT DECODING PERMISSION SIGNAL TO DECODING UNIT

S1622 DETECT PLAYBACK STATUS OF MASTER

S1623 MASTER IS NOT IN SYNCHRONOUS STATUS ?
— NO → S1625
— YES → S1624

S1624 TRANSMIT DECODING PERMISSION SIGNAL TO DECODING UNIT

S1625 PTS < STC ?
— NO → S1627
— YES → S1626

S1626 CURRENT FRAME IS LATER, AND ACCORDINGLY TRANSMIT FRAME DISCARD SIGNAL TO DECODING UNIT

S1627 TRANSMIT DECODING SUSPENSION SIGNAL TO DECODING UNIT

S1628 AFTER ELAPSE OF TIME PERIOD CORRESPONDING TO PTS - STC, TRANSMIT DECODING PERMISSION SIGNAL TO DECODING UNIT

END

EP 1 995 960 A1

44

FIG. 15

# FIG. 16

SYNCHRONIZATION CONTROL PROCESSING

START

S1701 ACQUIRE VIDEO PTS

S1702 DETECT STC

S1703 |PTS - STC| < t1 ? — NO / YES

S1704 PTS IS SYNCHRONOUS WITH STC, AND ACCORDINGLY TRANSMIT DECODING PERMISSION SIGNAL TO DECODING UNIT

S1705 DETECT MASTER

S1706 VIDEO MASTER ? — NO / YES

S1707 TRANSMIT PTS TO REFERENCE CLOCK UNIT

S1708 CLEAR ASYNCHRONIZATION COUNTER, AND CHANGE PLAYBACK STATUS OF VIDEO FRAME TO SYNCHRONOUS STATUS

S1709 0 < STC - PTS < t2 ? — NO / YES

S1710 CURRENT FRAME IS LATER, AND ACCORDINGLY TRANSMIT FRAME DISCARD SIGNAL TO DECODING UNIT

S1711 0 < PTS - STC < t3 ? — NO / YES

S1712 CURRENT FRAME IS FASTER, AND ACCORDINGLY TRANSMIT FRAME DECODING SUSPENSION SIGNAL TO DECODING UNIT

S1713 AFTER ELAPSE OF TIME PERIOD CORRESPONDING TO PTS - STC, TRANSMIT DECODING PERMISSION SIGNAL TO DECODING UNIT

S1714 ASYNCHRONIZATION COUNTER < M ? — NO / YES

S1715 TRANSMIT DECODING PERMISSION SIGNAL TO DECODING UNIT

S1716 INCREMENT ASYNCHRONIZATION COUNTER

S1733 CHANGE PLAYBACK STATUS OF VIDEO TO ASYNCHRONOUS STATUS

S1717 CHANGE PLAYBACK STATUS OF VIDEO TO ASYNCHRONOUS STATUS

S1718 DETECT MASTER

S1719 VIDEO MASTER ? — NO / YES

S1720 TRANSMIT PTS TO REFERENCE CLOCK UNIT

S1721 TRANSMIT DECODING PERMISSION SIGNAL TO DECODING UNIT

S1722 DETECT PLAYBACK STATUS OF MASTER

S1723 MASTER IS NOT IN SYNCHRONOUS STATUS ? — NO / YES

S1724 TRANSMIT DECODING PERMISSION SIGNAL TO DECODING UNIT

S1725 PTS - STC < t4 ? — NO / YES

S1726 PTS < STC ? — NO / YES

S1727 CURRENT FRAME IS LATER, AND ACCORDINGLY TRANSMIT FRAME DISCARD SIGNAL TO DECODING UNIT

S1728 TRANSMIT DECODING SUSPENSION SIGNAL TO DECODING UNIT

S1729 AFTER ELAPSE OF TIME PERIOD CORRESPONDING TO PTS - STC, TRANSMIT DECODING PERMISSION SIGNAL TO DECODING UNIT

S1730 CLEAR ASYNCHRONIZATION COUNTER

S1731 TRANSMIT DECODING SUSPENSION SIGNAL TO DECODING UNIT

S1732 AFTER ELAPSE OF TIME PERIOD CORRESPONDING TO t5, TRANSMIT DECODING PERMISSION SIGNAL TO DECODING UNIT

END

EP 1 995 960 A1

FIG. 17

EP 1 995 960 A1

# FIG. 18

SYNCHRONIZATION
CONTROL PROCESSING

START

┌─────────────────────┐
│ ACQUIRE VIDEO PTS │ S2001
└─────────────────────┘

┌─────────────────────┐
│ DETECT STC │ S2002
└─────────────────────┘

◇ |PTS - STC| < t1 ? ◇ S2003 —NO→ ◇ 0 < STC - PTS < t2 ? ◇ S2009 —NO→ ◇ 0 < PTS - STC < t3 ? ◇ S2011 —NO→ ◇ ASYNCHRONIZATION COUNTER < N ? ◇ S2034 —NO→ ◇ ASYNCHRONIZATION COUNTER < M ? ◇ S2014 —NO→ ┌ CHANGE PLAYBACK STATUS OF VIDEO TO ASYNCHRONOUS STATUS ┐ S2017

YES ↓ (S2003)

┌─────────────────────┐
│ PTS IS SYNCHRONOUS │ S2004
│ WITH STC, AND │
│ ACCORDINGLY TRANSMIT │
│ DECODING PERMISSION │
│ SIGNAL TO DECODING UNIT │
└─────────────────────┘

┌─────────────────────┐
│ DETECT MASTER │ S2005
└─────────────────────┘

◇ VIDEO MASTER ? ◇ S2006 —NO→

YES ↓

┌─────────────────────┐
│ TRANSMIT PTS │ S2007
│ TO REFERENCE │
│ CLOCK UNIT │
└─────────────────────┘

┌─────────────────────┐
│ CLEAR ASYNCHRONIZATION │ S2008
│ COUNTER, AND │
│ CHANGE PLAYBACK │
│ STATUS OF VIDEO FRAME │
│ TO SYNCHRONOUS STATUS │
└─────────────────────┘

YES ↓ (S2009)

┌─────────────────────┐
│ CURRENT FRAME IS │ S2010
│ LATER, AND ACCORDINGLY │
│ TRANSMIT FRAME DISCARD │
│ SIGNAL TO DECODING UNIT │
└─────────────────────┘

YES ↓ (S2011)

┌─────────────────────┐
│ CURRENT FRAME IS │ S2012
│ FASTER, AND ACCORDINGLY │
│ TRANSMIT FRAME DECODING │
│ SUSPENSION SIGNAL │
│ TO DECODING UNIT │
└─────────────────────┘

┌─────────────────────┐
│ AFTER ELAPSE OF TIME │ S2013
│ PERIOD CORRESPONDING │
│ TO PTS - STC, │
│ TRANSMIT DECODING │
│ PERMISSION SIGNAL │
│ TO DECODING UNIT │
└─────────────────────┘

YES ↓ (S2034)

┌─────────────────────┐
│ DETECT MASTER │ S2035
└─────────────────────┘

◇ VIDEO MASTER ? ◇ S2036 —NO→

YES ↓

┌─────────────────────┐
│ DETECT PLAYBACK │ S2037
│ STATUS OF AUDIO │
└─────────────────────┘

◇ AUDIO FRAME IS IN SYNCHRONOUS STATUS ? ◇ S2038 —NO→

YES ↓

┌─────────────────────┐
│ SWITCH MASTER │ S2039
│ FROM VIDEO TO AUDIO │
└─────────────────────┘

┌─────────────────────┐
│ TRANSMIT DECODING │ S2015
│ PERMISSION SIGNAL │
│ TO DECODING UNIT │
└─────────────────────┘

┌─────────────────────┐
│ INCREMENT │ S2016
│ ASYNCHRONIZATION │
│ COUNTER │
└─────────────────────┘

┌─────────────────────┐
│ CHANGE PLAYBACK │ S2033
│ STATUS OF │
│ VIDEO FRAME TO │
│ ASYNCHRONOUS STATUS │
└─────────────────────┘

┌─────────────────────┐
│ CHANGE PLAYBACK │ S2017
│ STATUS OF VIDEO TO │
│ ASYNCHRONOUS STATUS │
└─────────────────────┘

┌─────────────────────┐
│ DETECT MASTER │ S2018
└─────────────────────┘

◇ VIDEO MASTER ? ◇ S2019 —NO→ ┌ DETECT PLAYBACK STATUS OF MASTER ┐ S2022

YES ↓

┌─────────────────────┐
│ TRANSMIT PTS │ S2020
│ TO REFERENCE │
│ CLOCK UNIT │
└─────────────────────┘

┌─────────────────────┐
│ TRANSMIT DECODING │ S2021
│ PERMISSION SIGNAL │
│ TO DECODING UNIT │
└─────────────────────┘

┌─────────────────────┐
│ DETECT PLAYBACK │ S2022
│ STATUS OF MASTER │
└─────────────────────┘

◇ MASTER IS NOT IN SYNCHRONOUS STATUS ? ◇ S2023 —NO→ ◇ PTS - STC < t4 ? ◇ S2025 —NO→ ┌ CLEAR ASYNCHRONIZATION COUNTER ┐ S2030

YES ↓

┌─────────────────────┐
│ TRANSMIT DECODING │ S2024
│ PERMISSION SIGNAL │
│ TO DECODING UNIT │
└─────────────────────┘

YES ↓ (S2025)

◇ PTS < STC ? ◇ S2026 —NO→ ┌ TRANSMIT DECODING SUSPENSION SIGNAL TO DECODING UNIT ┐ S2028

YES ↓

┌─────────────────────┐
│ CURRENT FRAME IS │ S2027
│ LATER, AND ACCORDINGLY │
│ TRANSMIT FRAME DISCARD │
│ SIGNAL TO DECODING UNIT │
└─────────────────────┘

┌─────────────────────┐
│ TRANSMIT DECODING │ S2028
│ SUSPENSION SIGNAL │
│ TO DECODING UNIT │
└─────────────────────┘

┌─────────────────────┐
│ AFTER ELAPSE OF TIME │ S2029
│ PERIOD CORRESPONDING │
│ TO PTS - STC, │
│ TRANSMIT DECODING │
│ PERMISSION SIGNAL │
│ TO DECODING UNIT │
└─────────────────────┘

┌─────────────────────┐
│ CLEAR │ S2030
│ ASYNCHRONIZATION │
│ COUNTER │
└─────────────────────┘

┌─────────────────────┐
│ TRANSMIT DECODING │ S2031
│ SUSPENSION SIGNAL │
│ TO DECODING UNIT │
└─────────────────────┘

┌─────────────────────┐
│ AFTER ELAPSE │ S2032
│ OF TIME PERIOD │
│ CORRESPONDING TO t5, │
│ TRANSMIT DECODING │
│ PERMISSION SIGNAL │
│ TO DECODING UNIT │
└─────────────────────┘

END

EP 1 995 960 A1

# FIG. 19

VIDEO
PLAYBACK STATUS ←———————————————— SYNCHRONOUS STATUS ————————————————→

VIDEO
PLAYBACK DATA | 37 | 42 | 47 | 52 | 57 | 62 | 67 | 72 | 77 | 82 |

2106

REFERENCE
CLOCK (STC)
36  40        50        60        70        80

CORRECTION OF
REFERENCE CLOCK

AUDIO
PLAYBACK DATA | 36 | 39 | 60 | 63 | 66 | 69 | 72 |      | 72 | 75 | 78 | 81 | 84 |

2101  2102  2103  2104  2105        2107

AUDIO
PLAYBACK STATUS ←— SYNCHRONOUS —— ASYNCHRONOUS STATUS —×— FORCED SYNCHRONOUS STATUS —×— SYNCHRONOUS STATUS —→
STATUS
DISCONTINUITY

MASTER ←———— AUDIO MASTER ————×———— VIDEO MASTER ————×———— AUDIO MASTER ————→

FIG. 20

2000

2406

2413

COMMUNICATION UNIT

2401

RF

2402

BB

2415

2414

MAIN
CONTROL
UNIT

SYNCHRONOUS
PLAYBACK
DEVICE

2403

RF

2405

TUNER

2417

POWER

2416

STORAGE UNIT

2407

CAM — 2408

LCD — 2409

MIC — 2410

SPK — 2411

KEY — 2412

EP 1 995 960 A1

FIG. 21

ENCODED VIDEO DATA → VIDEO DECODING UNIT → VIDEO PLAYBACK DATA (1303)

TRANSMISSION UNIT (1301) → PACKED STREAM → SYSTEM DECODER (1302) → VIDEO PTS / AUDIO PTS → SYNCHRONIZATION CONTROL UNIT (1305)

ENCODED AUDIO DATA → AUDIO DECODING UNIT (1304) → AUDIO PLAYBACK DATA

——→ DATA LINE

----→ CONTROL LINE

EP 1 995 960 A1

F I G. 22

START

REQUEST DECODING UNITS TO START UP ⟍ S1401

REQUEST TRANSMISSION UNIT TO SUPPLY STREAM ⟍ S1402

VIDEO PTS MATCHES ENTRY POINT ? ⟍ S1403

NO

YES

INITIALIZE STC OF SYNCHRONIZATION CONTROL UNIT BASED ON VIDEO PTS ⟍ S1404

TRANSMIT VIDEO FRAME SYNCHRONOUS OUTPUT REQUEST TO VIDEO DECODING UNIT ⟍ S1405

AUDIO PTS MATCHES ENTRY POINT ? ⟍ S1406

NO

YES

TRANSMIT AUDIO FRAME SYNCHRONOUS OUTPUT REQUEST TO VIDEO DECODING UNIT ⟍ S1407

END

FIG. 23A

PTS

NO FRAME MATCHING
ENTRY POINT

ENTRY POINT

ENTRY POINT
ACCEPTABLE RANGE

DISCONTINUITY OCCURRENCE
DUE TO PTS BIT ERRORS

STREAM

● ···FRAME

FIG. 23B

DISCONTINUITY OCCURRENCE
DUE TO DATA MISSING

PTS

ENTRY POINT
ACCEPTABLE RANGE

ENTRY POINT

NO FRAME MATCHING ENTRY POINT

STREAM

● ···FRAME

FIG. 24A

MPEG2-TS

| TS PACKET | TS PACKET | ... | TS PACKET | TS PACKET | TS PACKET | TS PACKET | TS PACKET |

DATA SEARCHING FOR PLAYBACK START FRAME

FIG. 24B

0

Ta — TIME PERIOD FOR SEARCHING AUDIO DATA FOR AUDIO PLAYBACK START FRAME

Tv — TIME PERIOD FOR SEARCHING VIDEO DATA FOR VIDEO PLAYBACK START FRAME

Te — TIME PERIOD FOR COMPLETING SEARCHING BOTH AUDIO AND VIDEO DATA

TIME

FIG. 24C

SEARCH START

0

VIDEO PLAYBACK START FRAME IS FOUND, AND PREPARATION FOR OUTPUTTING VIDEO FRAME IS COMPLETE

OUTPUT START

OUTPUT START AFTER Te

Te

TIME

FIG. 25A

FIG. 25B

## INTERNATIONAL SEARCH REPORT

| | International application No. |
|---|---|
| | PCT/JP2007/053512 |

A. CLASSIFICATION OF SUBJECT MATTER
*H04N5/93*(2006.01)i, *H04N7/173*(2006.01)i, *H04N7/26*(2006.01)i

According to International Patent Classification (IPC) or to both national classification and IPC

B. FIELDS SEARCHED

Minimum documentation searched (classification system followed by classification symbols)
H04N5/93, H04N7/173, H04N7/26

Documentation searched other than minimum documentation to the extent that such documents are included in the fields searched
Jitsuyo Shinan Koho          1922–1996   Jitsuyo Shinan Toroku Koho   1996–2007
Kokai Jitsuyo Shinan Koho    1971–2007   Toroku Jitsuyo Shinan Koho   1994–2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 07-050818 A  (Matsushita Electric Industrial Co., Ltd.), 21 February, 1995 (21.02.95), Par. Nos. [0018] to [0025]; Figs. 1 to 8 (Family: none) | 1-11 |
| A | WO 1997/013364 A  (Matsushita Electric Industrial Co., Ltd.), 10 April, 1997 (10.04.97), Pages 13 to 24; Figs. 1 to 3 & US 5923869 A          & EP 000847197 A1 | 1-11 |
| A | JP 2001-346166 A  (Matsushita Electric Industrial Co., Ltd.), 14 December, 2001 (14.12.01), Par. Nos. [0046] to [0081]; Figs. 1 to 6 & US 2001/0044711 A1    & EP 001146730 A2 | 1-11 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered  to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 May, 2007 (01.05.07) | 22 May, 2007 (22.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2007/053512 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-259314 A  (Nippon Hoso Kyokai), 12 September, 2003 (12.09.03), Par. Nos. [0009] to [0024]; Figs. 1 to 5 (Family: none) | 1-11 |

Form PCT/ISA/210 (continuation of second sheet) (April 2005)

**EP 1 995 960 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H750818 B
- JP H9514146 B
- JP 2001346166 A